(19) Europäisches Patentamt
European Patent Office
Office européen des brevets

(11) EP 2 456 592 B1

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(21) Anmeldenummer: **10737510.7**

(22) Anmeldetag: **20.07.2010**

(51) Int Cl.:
***B23K 26/04*** (2006.01)

(86) Internationale Anmeldenummer:
**PCT/EP2010/004437**

(87) Internationale Veröffentlichungsnummer:
**WO 2011/009594 (27.01.2011 Gazette 2011/04)**

(54) **LASERBEARBEITUNGSKOPF UND VERFAHREN ZUR KOMPENSATION DER FOKUSLAGENÄNDERUNG BEI EINEM LASERBEARBEITUNGSKOPF**

LASER MACHINING HEAD AND METHOD OF COMPENSATING FOR THE CHANGE IN FOCAL POSITION OF A LASER MACHINING HEAD

TÊTE D'USINAGE AU LASER ET PROCÉDÉ PERMETTANT DE COMPENSER LA VARIATION DE POSITION DU FOYER POUR UNE TÊTE D'USINAGE AU LASER

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **20.07.2009 DE 102009033881**
**08.09.2009 EP 09011481**

(43) Veröffentlichungstag der Anmeldung:
**30.05.2012 Patentblatt 2012/22**

(73) Patentinhaber:
- **Precitec KG**
**76571 Gaggenau-Bad Rotenfels (DE)**
- **Precitec ITM GmbH**
**65760 Eschborn (DE)**

(72) Erfinder: **STORK, Ingo**
**80799 München (DE)**

(74) Vertreter: **Wagner, Bernhard Peter**
**ter Meer Steinmeister & Partner GbR**
**Mauerkircherstraße 45**
**81679 München (DE)**

(56) Entgegenhaltungen:
**DE-A1- 19 716 293 DE-A1-102004 043 076**

EP 2 456 592 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft einen Laserbearbeitungskopf sowie ein Verfahren zur Kompensation der Fokuslagenänderung bei diesem Laserbearbeitungskopf, insbesondere zur Kontrolle und Regelung der Brennfleckposition und -größe bei der Lasermaterialverarbeitung sowie zur Visualisierung von Bearbeitungsoberfläche, Schweißbad, Prozessleuchten und Dampfkapillare in miteinander verrechneten Bildern sowie zur technisch-kognitiver Bedienung von Laserbearbeitungsprozessen.

Bei der Bearbeitung von Materialien mit einem Laserbearbeitungskopf wird Laserstrahlung mittels eines Linsensystems fokussiert. Das Linsensystem selbst erwärmt sich allerdings während der Materialbearbeitung mittels Laserlicht, wodurch sich auch die optischen Eigenschaften des verwendeten Linsensystems verändern. Dadurch kommt es auch zu einer Veränderung der Fokuslage des Strahlenverlaufs des Laserlichtes. Eine Veränderung dieser Fokuslage relativ zur Position der zu bearbeiteten Materialien kann dazu führen, dass das gewünschte Bearbeitungsergebnis nicht erreicht wird.

Zur Prozessüberwachung bei Lasermaterialbearbeitungsprozessen werden diverse Überwachungssysteme eingesetzt. Diese basieren zum Teil auf der Detektion von Prozessemissionen, also insbesondere von elektromagnetischer Strahlung aus der Wechselwirkungszone zwischen Laserstrahl und Werkstück mittels Photodioden, anderen Photosensoren oder bildgebender Sensorik, insbesondere einer Kamera. Eine Kamera wird zur Echtzeit- oder In-Prozessüberwachung in der Regel in das optische System eines Laserbearbeitungskopfes integriert, z.B. über eine beschichtete halbtransparente Oberfläche.

Ansätze zur Feststellung der Fokuslagenänderung relativ zum Werkstück mittels Intensitäten einzelner Photodioden wurden bereits in der Wissenschaft diskutiert.

So ist ein Verfahren bekannt, welches zwei optische Sensoren für unterschiedliche Wellenlängen in die Glasfaser des zugeführten Laserlichtes einbringt. Dabei wird versucht, einen Rückschluss auf die Fokuslagenänderung auf der Basis der relativen Änderung der Intensitäten der beiden optischen Sensoren zueinander zu ziehen, um dann die Fokuslagenänderung auszugleichen. Vgl. F. Haran, D. Hand, C. Peters und J. Jones,"Real-time focus control in laser welding", Meas. Sei. Technol., Jahr: 1996, Seiten: 1095-1098.

Bei einem weiteren bekannten Verfahren wird mittels einer Photodiode die Intensität einer Wellenlänge während eines Laserschweißprozesses mit Fokuslagenvariation relativ zum Werkstück gemessen. Mit Neuronalen Netzen wurde eine Funktion angenähert, die der Ausgabe der Photodiode entspricht und die anschließend zur ausgleichenden Steuerung der Fokuslage verwendet wurde. Vgl. G. Hui, O. Flemming Ove,"Automatic Optimization of Focal Point Position in CO2 Laser Welding with Neural Networks in Focus Control System", Jahr 1997.

Aus der DE 195 163 76 ist bekannt, dass durch das Aufprägen einer Brennfleckoszillation die Fokus-Optimallage aus der umgerechneten Amplitude und Phasenbeziehung einer Photodiodeintensität errechnet wird.

Die DE 199 254 13 beschreibt eine Einrichtung zur Feststellung der Brennpunktposition eines Schweißstrahls.

Die DE 10 2004 043 076 A1 beschreibt ein Verfahren zum Überwachen eines Laserstrahlbearbeitungsvorgangs. Bei diesem Verfahren wird ein an einem Roboterarm befestigter Laserkopf relativ zu mindest einem zu bearbeiteten Werkstück positioniert. Außerdem wird zum Bearbeiten die Oberfläche des Werkstücks mit einer Ablenkvorrichtung und einer Fokussiervorrichtung für mindestens einen Laserstrahl in einer Bearbeitungszone abgetastet. Mit mindestens einer Kamera werden die Oberfläche des Werkstücks und den Auftreffpunkt des Laserstrahls wiedergebende Ist-Signale gewonnen. Die Signale werden in einer Steuerrichtung verarbeitet, wobei die Ist-Signale mit Soll-Signalen verglichen werden, und wobei dann, wenn die Ist-Signale von den Soll-Signalen um einen vorgegebenen Betrag voneinander abweichen, Stellsignale erzeugt werden, die zur Verminderung der Abweichungen Stellelementen des Roboterarms und/oder der Ablenkvorrichtung und/oder der Fokussiervorrichtung zugeführt werden.

Die DE 197 16 293 A1 beschreibt eine Vorrichtung zur Regelung von Schweißparametern beim Laserstrahlschweißen. Diese Vorrichtung umfasst eine CCD-Kamera zur Detektion der Geometrie eines beim Schweißprozess gebildeten Schmelzbades, wobei die Kamera an eine bilddatenverarbeitende Einheit angeschlossen ist. Hierbei erfolgt die Regelung der Einschweißtiefe in Abhängigkeit der detektierten Schmelzbadlänge oder Schmelzbadfläche, eine Regelung der Fokuslage des Laserstrahls in Abhängigkeit eines geometrischen Ähnlichkeitsfaktors, der sich als Quotient der Schmelzbadfläche und dem Abstand zwischen den geometrischen Schwerpunkten des Laserstrahl-Keyholes und der Schmelzbadfläche berechnet. Des Weiteren ist eine Detektion und Regelung von Spalten zwischen den Werkstücken von Höhenversatz zwischen den Werkstücken und/oder lateralem Versatz des Laserstrahls möglich.

Der Erfindung liegt die Aufgabe zugrunde, einen Laserbearbeitungskopf sowie ein Verfahren zur Kompensation der Fokuslagenänderung bei einem Laserbearbeitungskopf zu schaffen, durch die eine definierte relative Fokuslage zu bearbeiteten Materialien während eines Bearbeitungsprozesses in effektiver Weise aufrechterhalten werden kann.

Diese Aufgabe wird durch den Laserbearbeitungskopf nach Anspruch 1 sowie durch das erfindungsgemäße Verfahren gemäß dem nebengeordneten Anspruch 15 gelöst. Vorteilhafte Ausgestaltungen und Weiterbildungen der Erfindung sind in den Unteransprüchen dargelegt.

Insbesondere wird die Aufgabe dadurch gelöst, dass die Fokuslagenänderung relativ zum Werkstück erfasst

wird und dann nach entsprechender Berechnung eines Korrekturfaktors die Fokuslage angepasst wird.

Außerdem sollten bei Verwendung einer bildgebenden Sensoreinheit auch möglichst hochwertige Bilder des Bearbeitungsprozesses entstehen.

Kern der Erfindung ist die Erfassung der Fokuslagenänderung relativ zur Bearbeitungsoberfläche sowie einer entsprechenden Korrektur der Fokuslage oder des Brennfleckdurchmessers bei Lasermaterialverarbeitungsprozessen. Die Erfassung erfolgt entweder mittels Bildschärfe der bildgebenden Überwachungssensorik oder eines Temperaturfihlers im Laserbearbeitungskopf oder der verwendeten Strahlungsintensität resultierend aus Lichtenergie pro Zeitintervall oder eines angenäherten Modells, errechnet aus der gemessenen Kaustik des Laserbearbeitungskopfes bei verschiedenen Laserstrahlungsintensitäten oder eines selbstlernenden Mechanismus oder eines technisch-kognitiven Verfahrens mit der Berücksichtigung von gelernten Erfahrungswerten oder einer aus mehreren Elementen dieser Erfassungsmöglichkeiten sowie die Anpassung der Fokuslage durch Positionsänderung des Laserbearbeitungskopfes relativ zur Bearbeitungsoberfläche oder durch Anpassung beweglicher Teile des verwendeten optischen Systems.

Erfindungsgemäß ist also ein Laserbearbeitungskopf sowie ein Verfahren zur Anpassung der Fokuslage vorgeschlagen. Der erfindungsgemäße Laserbearbeitungskopf umfasst eine Kamera mit einer davor im Strahlengang angeordneten Abbildungsoptik zur Beobachtung eines Bearbeitungsbereiches eines Werkstücks, das mittels eines Arbeitslaserstrahls, insbesondere durch Schweissen oder Schneiden, bearbeitet wird, eine Fokussieroptik zur Fokussierung des Arbeitslaserstrahls auf das Werkstück, und eine Auswerteeinheit, die dazu angepasst ist, mittels eines Verstellweges der Abbildungsoptik in Richtung der optischen Achse, die dazu nötig ist, bei einer Verschiebung des Brennpunkts der Fokussierlinse das Kamerabild wieder scharf einzustellen, einen Verstellweg zu berechnen, der eine Brennpunktverschiebung der Fokussierlinse kompensiert. Erfindungsgemäß können weiter kognitive Systeme eingesetzt werden, die durch einen Lernprozess die Verstellung der Fokussierlinse abhängig von einer Bearbeitungszeit oder von Bearbeitungssituationen so regeln, dass der Arbeitsfokus des Laserstrahls stets auf der Werkstückoberfläche oder in einer relativ zur Werkstückoberfläche definierten Lage liegt, um damit ein optimales Schweiss- oder Trenn- oder Laserbearbeitungsergebnis zu liefern.

Die Erfindung wird im Folgenden beispielsweise anhand der Zeichnung näher erläutert. Es zeigen:

Fig. 1 eine stark vereinfachte schematische Ansicht eines erfindungsgemäßen Laserbearbeitungskopfes;

Fig. 2 photographische Bildaufnahmen für eine zu nahe, optimale und zu ferne Arbeitsfokuslage;

Fig. 3 eine schematische Ansicht eines Kamerabildes, welches mit dem HDR-Verfahren gemäß der Erfindung verarbeitet ist;

Fig. 4 ein Blockschaltbild einer erfindungsgemäßen HDR-Bildsequenzverarbeitung;

Fig. 5 ein Blockschaltbild eines erfindungsgemäßen technisch-kognitiven Systems;

Fig. 6 ein Blockschaltbild eines weiteren erfindungsgemäßen technisch-kognitiven Systems;

Fig. 7 ein Blockschaltbild eines geschlossenen Regelkreises der z-Achsenverstellung basierend auf einem Vergleich der Kameralinsenposition des schärfsten Bildes $S_{max}$ mit der Linsen-Nullposition ZP;

Fig. 8 ein Blockschaltbild eines künstlichen neuronalen Netzwerkes, welchem die angelegte Laserleistung sowie Prozessparameter zur Steuerung des Kameralinsennullpunktes zugeführt werden;

Fig. 9 Bilder, die während eines Schweißvorgangs einer Überlappstruktur aufgenommen wurden, während der Bearbeitungskopf den Abstand um jeweils 10 mm erhöht;

Fig. 10 Ergebnisse von Schärfeabschätzungstechniken, die auf ein koaxial aufgenommenes prozessinternes Video bei einer simulierten Brennpunktverschiebung von $\pm$ 5 mm angewandt wurden;

Fig. 11 ein Diagramm, welches gemittelte Brennpunktverschiebungen für verschiedene Optiken gemessen bei verschiedenen Laserleistungen und Zeitintervallen zeigt (Exp. 1: 1 Kilowatt, Exp. 2: 2 Kilowatt, Exp. 3: 4 Kilowatt, Exp. 4: 6 Kilowatt, Exp. 5: 6 Kilowatt nach 5 Minuten, Exp. 6: 6 Kilowatt nach 10 Minuten, Exp. 7: 6 Kilowatt nach 20 Minuten); und

Fig. 12 ein Diagramm mit Brennpunktverschiebungen, welche mit einem empirischen Modell basierend auf den experimentellen Ergebnissen, als auch mittels eines künstlichen neuronalen Netzwerkes berechnet wurden (1 bis

10 Minuten: 1 Kilowatt, 11 bis 20 Minuten: 2 Kilowatt, 21 bis 30 Minuten: 4 Kilowatt, 31 bis 45 Minuten: 6 Kilowatt, $z_{RF}$ = 7.2 mm).

In Fig 1 ist ein erfindungsgemäßer Laserbearbeitungskopf 100 dargestellt, der eine Prozessüberwachungskamera 102, eine Temperaturerfassungseinheit, ein optisches System mit verstellbaren Linsen oder Spiegeln oder eine Positionssteuereinheit des Laserbearbeitungskopfes 100 relativ zur Bearbeitungsoberfläche 104 enthalten kann.

Das optische System des Laserbearbeitungskopfes 100 umfasst eine Kollimatorlinse 106, die einen Laserstrahl 108 mit der Wellenlänge $\lambda_L$ aus einer Faser 110 kollimiert, wobei der kollimierte Laserstrahl durch einen Strahlteiler 112 mittels einer Fokussierlinse 114 auf die Bearbeitungsoberfläche 104 oder auf eine relativ zur Bearbeitungsoberfläche 104 definierte Lage fokussiert wird. Vor der Kamera 102 ist eine Kameralinse 116 angeordnet, die um einen Korrekturwert $\Delta\ d_{KL}$ in Richtung der optischen Achse verstellt werden kann. Der Laserbearbeitungskopf 100 weist ferner einen Temperatursensor 118 an der Fokussierlinse 114 sowie einen Temperatursensor 120 an der Kollimatorlinse 106 auf, die beide mit einer Auswerte- und Steuerungseinheit 122 verbunden sind. Zusätzlich ist mit der Auswerte- und Steuerungseinheit 122 eine Prozessüberwachungssensorik 124 verbunden.

Der erfindungsgemäße Laserbearbeitungskopf 100 umfasst die Kamera 102 mit der davor im Strahlengang angeordneten Abbildungsoptik 116 zur Beobachtung eines Bearbeitungsbereiches eines Werkstücks, das mittels des Arbeitslaserstrahls 108, insbesondere durch Schweissen oder Schneiden, bearbeitet wird, die Fokussieroptik 114 zur Fokussierung des Arbeitslaserstrahls 108 auf das Werkstück, und die Auswerteeinheit 122, die dazu angepasst ist, mittels eines Verstellweges der Abbildungsoptik 116 in Richtung der optischen Achse, der dazu nötig ist, bei einer Verschiebung des Brennpunktes der Fokussierlinse 114 das Kamerabild wieder scharf einzustellen, einen Verstellweg zu berechnen, der eine Brennpunktverschiebung der Fokussierlinse 114 kompensiert.

Die Bearbeitungsoberfläche 104 kann mittels einer Beleuchtungsvorrichtung (in Fig. 1 nicht dargestellt) mit Licht der Wellenlänge $\lambda_K$ im Unterschied zur verwendeten Bearbeitungslaserlichtwellenlänge $\lambda_L$ beleuchtet werden. Die Beleuchtungsvorrichtung kann an einer Außenseite des Laserbearbeitungskopfes 100 angebracht sein, um die Werkstückoberfläche 104 von außen zu beleuchten. Es ist jedoch auch möglich, das von der Beleuchtungsvorrichtung kommende Licht koaxial in den Strahlengang des Laserbearbeitungsstrahls 108 über einen Strahlteiler einzukoppeln, wodurch die Beleuchtungsvorrichtung in das optische System des Laserbearbeitungskopfes 100 integriert werden kann.

Alternativ oder ergänzend kann erfindungsgemäß zur Bildgewinnung auch ein High Dynamic Range (HDR) Verfahren verwendet werden, bei dem ein bildgebender Sensor entweder mehrfach, also mindestens zwei Mal, pro Bild zu unterschiedlichen Zeitpunkten abgetastet wird oder mehrere Bilder, also zwei, drei oder mehr Bilder mit unterschiedlichen Belichtungszeiten oder mit mehreren Kameras erstellt und anschließend miteinander zu mindestens einem Bild verrechnet werden. Dieses Vorgehen ermöglicht eine Bild-, Bildsequenz- oder Videoaufnahme, die zugleich die umliegende Bearbeitungsfläche, das Prozessleuchten sowie die Dampfkapillare bzw. das Keyhole in einem Bild sichtbar machen. Die genannten Bereiche liegen in den Intensitätswerten bei einer Bildaufnahme von Laserbearbeitungsprozessen in einem weiten Bereich verteilt, der durch das genannte Verfahren in einem Bild sichtbar gemacht werden kann. Zur Anzeige auf einem Bildschirm oder Anzeigegerät im Zusammenhang mit einem Prozessüberwachungssystems bzw. einer Auswerte- oder Steuereinheit mit vergleichsweise niedriger Intensitätsauflösung wird ein so erstelltes Bild oder Bildsequenz über ein Grauwert- oder Tonemapping-Verfahren angepasst dargestellt.

Wie in den Figuren 3 und 4 dargestellt, werden, um ein HDR Verfahren oder ein Verfahren zur besseren Visualisierung von Bearbeitungsfläche, Prozessleuchten und Dampfkapillare durchzuführen, erfindungsgemäß mehrere Bilder oder Pixelarrays miteinander verrechnet.

In Figur 3 ist das dargestellte Prozessleuchten mit dem Bezugszeichen 1 und die dargestellte Dampfkapillare mit dem Bezugszeichen 2 versehen. Weiter ist in Figur 3 ein Schweißbad 3, die Schweißnahtgeometrie 4 und die Bearbeitungsoberfläche 5 gezeigt.

Die unterschiedlichen Bilder können durch mehrfaches Abtasten eines bildgebenden Sensors entstehen oder durch simultane Bildaufnahme mit mehreren Kameras oder durch sequentielle Bildaufnahme mit einer Kamera, aber unterschiedlichen Belichtungszeiten, genannt Multi-Exposure-Technik. Die Verrechnung der einzelnen Bildaufnahmen kann auf verschiedene Verfahrensarten geschehen. Dazu gehört im einfachsten Fall das Aufaddieren und Mitteln der einzelnen Bildwerte von mehreren Bildern einer Bildsequenz aus mindestens zwei Bildaufnahmen. Für eine bessere Bildgewinnung können die Bildwerte oder Pixel aus einer Bildsequenz aus mindestens zwei Bildaufnahmen gewichtet gemittelt werden.

Als Gewichtungsverfahren kann entweder ein Entropie-Verfahren verwendet werden, zur Gewichtung nach dem Informationsgehalt, oder es kann eine gewichtete Mittelung unter Berücksichtigung der Kamera-Antwort-Funktion (engl. Camera Response Function), durchgeführt werden. Hierzu muss ein Rückschluss auf die reale oder realitätsnahe Strahlungsenergie pro Fläche erfolgen, der durch die folgende Funktion gegeben ist:

$$x_{ij} = \frac{I^{-1}(y_{ij})}{t_i}$$

Die Gewichtung für die einzelnen Strahlungsenergien lautet dann:

$$x_j = \frac{\sum_i w_{ij} * x_{ij}}{\sum_i w_{ij}}$$

Dabei ist *i* der Bildindex aus einer Bildsequenz mehrerer Bildaufnahmen, *j* die Pixel Position, $t_i$ die Belichtungszeit oder Abtastzeit der Bildaufnahme *i*, $y_{ij}$ der Intensitätswert des Pixels der Bildaufnahme *i* an der Position *j*, $I^{-1}$ () die inverse Camera Response Function, $x_j$ die geschätzte Strahlungsenergie pro Fläche an Pixelposition *j*, $w_{ij}$ die Gewichtungsfunktion des Zuverlässigkeitsmodells. Die Erfindung betrifft explizit den Einsatz dieser dargestellten HDR-Bildverrechnungsmethoden in Bearbeitungsverfahren wie Trennen oder Fügen von Materialien, insbesondere mit Laserbearbeitungsköpfen und/oder daran angeschlossene Prozessüberwachungssysteme.

Es gilt für den Korrekturwert der sich aus einer anzupassenden Fokuslage relativ zum Werkstück ergibt beispielsweise folgende Formel,

$$\Delta z_f = A * \Delta z_B + B * \Delta z_{OS}$$

$$= C * \Delta d_{KL} + D * \Delta T + E * \Delta t + F * \Delta P_L + G * M + H * C_{OG}$$

wobei *A, B, C, D, E, F, G, H* variabel zu bestimmende Parameter sind, die auch den Wert "0" annehmen können.

Die Methoden zur Bestimmung der einzelnen Komponenten stellen sich wie folgt dar:

Die Erfassungsmethoden für einen Korrekturwert $\Delta z_f$, die einzeln sowie in Kombination verwendet werden können gestalten sich wie folgt:

Bei der Einstellung eines Prozessüberwachungssystems wird die Fokussiereinheit der bildverarbeitenden Sensorik so eingestellt, dass das bildgebende Signal ein möglichst scharfes Bild ergibt. Die Ermittlung der möglichst hohen Bildschärfe oder Auflösung kann dabei mit verschiedenen Verfahren gefunden werden. Die Erfindung schließt alle gängigen Verfahren zur Fokussierung bzw. Bildschärfefindung ein, einige wichtige sollen explizit genannt werden:

Varianz: Quadrierte Differenz der Bildwerte um den Mittelwert mit anschließender Aufsummierung. Bei einem Bild *i*(*x*, *z*) und S als Anzahl der Pixel kann diese folgendermaßen berechnet werden:

$$VAR = \frac{1}{S} \sum_{x=0}^{m} \sum_{y=0}^{n} \left[ i(x,y) - m_g \right],$$

als auch

$$VAR = \frac{1}{S} \sum_{x=0}^{m} \sum_{y=0}^{n} \left[ i(x,y) \right]^2 m_g .$$

Eine hohe Varianz, bzw. breites Histogramm bedeutet guter Kontrast.

Sum Modulus Difference (SMD): Maß basierend auf Bildgradienten,

$$\nabla_i = \left[\frac{\partial_i(x,y)}{\partial x} \frac{\partial_i(x,y)}{\partial y}\right]^T,$$

sowie dessen Betrag

$$|\nabla_i| = \left[\sqrt{\left(\frac{\partial_i(x,y)}{\partial x}\right)^2 + \left(\frac{\partial_i(x,y)}{\partial y}\right)^2}\right].$$

SMD wird bestimmt mit

$$SMD = \frac{1}{S}\sum_{x=0}^{m} \sum_{y=0}^{n} |\nabla_i|,$$

bei scharfen Bildern ist der Unterschied von Bildpunkt *x* zu *x* +1 sehr groß.

Signalleistung (SL): Das Maximum von

$$SL = \sum_{x=0}^{m} \sum_{y=0}^{n} \left[i(x,y)\right]^2$$

ergibt den besten Bildzustand, gilt auch für die nach Liao veränderte Schwellwertmethode.

Fourier-Analyse: Die Diskrete-Fourier-Transformation

$$I(u,v) = \frac{1}{mn}\sum_{x=0}^{m} \sum_{y=0}^{n} i(x,y)e^{-2\pi j\left(\frac{xu}{m}+\frac{xv}{n}\right)}$$

so wie die schneller zu berechnende Fast-Fourier-Transformation wird unter Verwendung von

$$I(u,v) = \frac{1}{m}\sum_{x=0}^{m} \left[\sum_{y=0}^{n} i(x,y)e^{-2\pi jy\left(\frac{v}{n}\right)}\right] * e^{-2\pi jx\left(\frac{u}{m}\right)}$$

Zeilen und Spaltenweise ermittelt. Im defokalen Bild nimmt der hohe Frequenzbereich, zu berechnen durch aufsummieren der Leistungsspektren, gegenüber dem fokalen Bild signifikant ab.

Laplace-Operator oder Laplace-Fokussierungsfunktion: stellt das zweite statistische Moment,

$$L = k\sum_{u=0}^{d} \sum_{v=0}^{f}\left|\left(u^2 + v^2\right)I(u,v)\right|^2,$$

der Fourierspektren dar und steht im Zusammenhang mit hohen Frequenzen. Durch Operatoridentität und Formelerweiterung kann diese in den Zeitbereich umgeformt werden. Die darin enthaltenen einzelnen Komponenten müssen durch Approximationen der 2. Ableitung bestimmt werden wodurch wir

$$L = mn\sum_{u=0}^{d}\sum_{v=0}^{f}\left[i(x+1,y)+i(x-1,y)+i(x,y+1)+i(x,y-1)-4i(x,y)\right]^2$$

erhalten und direkt bestimmen können.

Fokussierung durch Feature Point bzw. Objekt Tracking: Feature Points sind Pixel mit markantem Umfeld, so dass sie in einem anderen Bild der gleichen Bildsequenz wiedergefunden werden können. Dadurch können Bewegungstendenzen in Bildsequenzen festgestellt und die Fokussierung kann so gleich in die richtige Richtung arbeiten. Außerdem ist es möglich per Objekterkennungsalgorithmen in bekannten Bildsequenzen ein Fokusfenster für die Fokussierungsfunktion zu erstellen und damit eine optimale Schärfeeinstellung des Zielobjekts zu ermöglichen. Dazu können viele Verfahren eingesetzt werden, es soll aber der Harris Eckendetektor, die Aufteilung des Bildes in bestimmte Untergrößen, Bildgradient und Schwellwertberechnung, Sum of Square Difference, Fuzzy Logic zur Autofokussierung, Support Vektor Klassifikation, Hauptkomponenten Analyse u.v.m. eingesetzt werden.

Bei dem erfindungsgemäßen Verfahren wird in einem Einstellprozess des Systems zunächst ein Referenzbild von dem Bearbeitungsbereich aufgenommen, um als Referenz für die Bildschärfe im Vergleich zu einem später aufgenommenen Kamerabild, wenn sich die Arbeitsfokuslage verschoben hat, zu dienen. Dieses kann während oder vor einem Bearbeitungsprozess erstellt werden.

Während eines Bearbeitungsvorgangs kann dann das Bildsignal bei konstanten Einstellparametern des optischen Systems an Schärfe verlieren, wenn z.B. eine Positionsänderung des Bearbeitungskopfs 100 relativ zum Werkstück oder eine Veränderung der Eigenschaften des optischen Systems aufgrund von thermischen Einflüssen des Laserlichts stattfindet. So kann sich durch eine Erwärmung der Fokussierlinse 114 aufgrund der absorbierten Laserleistung der Brechungsindex der Fokussierlinse 114 ändern, wodurch der Brennpunkt der Fokussierlinse 114 an ihrer werkstückzugewandten Seite in Richtung der optischen Achse verschoben wird. In der Regel verschiebt sich der Brennpunkt der Fokussierlinse 114 und damit der Arbeitsfokus des Laserstrahls 108, also das von der Fokussierlinse 114 auf dem Werkstück erzeugte Bild der Arbeitslaserquelle zu der Fokussierlinse 114 hin. Die Arbeitslaserquelle kann z.B. die Austrittsfläche einer Glasfaser 110 sein, die das Laserlicht zuführt.

Über Autofokussieralgorithmen wird erfindungsgemäß das optische System, insbesondere die Lage der Fokussierlinse 114 oder die Lage des Laserbearbeitungskopfes 100. in Richtung der optischen Achse während des Bearbeitungsprozesses wiederum so angepasst, dass das bildgebende Signal wieder eine möglichst hohe Bildschärfe liefert oder möglichst nah am aufgenommenen Referenzbild ist.

Die notwendige Korrektur, $\Delta z_{BS}$ des optischen Systems kann dabei erfindungsgemäß durch Anpassung der Position des Laserbearbeitungskopfes 100 relativ zur Bearbeitungsoberfläche 104 um $\Delta z_B$, oder durch Anpassung beweglicher Teile des optischen Systems, insbesondere der Fokussierlinse 114 oder einzelnen Komponenten davon (Zoom), erfolgen ($\Delta z_{OS}$).

In einem besonders bevorzugten Ausführungsbeispiel kann, um einen direkten Einfluss auf das Bearbeitungsergebnis durch ein Verstellen des Laserbearbeitungskopfes 100 oder der Fokussierlinse 114 in einem Anpassungsprozess zu vermeiden, lediglich eine Fokussiereinheit, insbesondere die Kameralinse 116, der Prozessbeobachtungskamera 102 durch Verstellen in Richtung der optischen Achse angepasst werden.

Der durch das Verstellen ermittelte Korrekturwert der Fokussiereinheit 116 der Prozessüberwachungskamera 102, $\Delta d_{KL}$, der notwendig ist, um ein möglichst scharfes Bild zu erhalten, kann entweder direkt oder indirekt unter Berücksichtigung der Abbildungsverhältnisse des optischen Systems in Beziehung mit dem notwendigen Korrekturfaktor $\Delta z_f$ zur Anpassung der Fokuslage bzw. des Brennfleckdurchmessers gesetzt werden.

Mit anderen Worten, über die Bildschärfe der Prozessüberwachungskamera 102 wird automatisch über eine eigenständige Fokussiereinheit fokussiert, z.B. eine verstellbare Linse 116 oder ein Spiegel. Diese Anpassung und der dabei entstandene Korrekturwert $\Delta d_{KL}$ kann dann direkt über anpassende Parameter in Beziehung mit der Fokuslage des Laserbearbeitungskopfes 100 relativ zur Bearbeitungsoberfläche 104 gesetzt werden und so geregelt werden.

Bei der Umrechnung bzw. Parametrierung dieser Beziehung von Korrekturwert $\Delta d_{KL}$ und Korrekturwert $\Delta z_f$ wird erfindungsgemäß nicht nur berücksichtigt, dass die Abbildungsverhältnisse von Prozessbeobachtungskamera 102 zur Werkstücksoberfläche 104 und Laserstrahlquelle zur Werkstücksoberfläche 104 mit eingerechnet werden müssen, es werden auch die Fokussierungsunterschiede aufgrund der unterschiedlichen Wellenlängen des Beobachtungssystems $\lambda_K$ und der verwendeten Bearbeitungslaserlichtwellenlänge $\lambda_L$ auf Grund der chromatischen Aberration oder anderer wellenlängenabhängigen Effekte beachtet.

Erfindungsgemäß werden also die Parameter entsprechend der Wellenlängenunterschiede und Abbildungsunterschiede berechnet, aus welchen dann die Verschiebung der Fokuslage des Arbeitsfokus des Laserbearbeitungskopfes 100 berechnet werden kann. Eine Erwärmung der Kollimatorlinse 106, welche ebenfalls aufgrund der Verschiebung ihrer Brennpunkte in Richtung der optischen Achse eine Verschiebung des Arbeitsfokus des Arbeitslaserstrahls 108, insbesondere von dem Werkstück weg in Richtung der Fokussierlinse 114 bewirkt, kann mittels des oben beschriebenen Verfahrens mittels Autofokusanpassung der Fokussiereinheit 116 der Kamera 102 nicht erfasst werden.

In einer weiteren Ausgestaltung der Erfindung wird daher ein Verfahren vorgeschlagen, durch das noch besser die Arbeitsfokuslagenkorrektur des Arbeitslaserstrahls 108 durchgeführt werden kann, insbesondere über einen Regler oder ein technisch-kognitives System wie im weiteren Verlauf beschrieben wird, wobei darüber hinaus überschwingende oder unpassende Korrekturen vermieden werden.

Eine Klassifikation anhand von extrahierten Bildmerkmalen wird erfindungsgemäß dazu verwendet, aus den ggf. dimensionsreduzierten Bilddaten die Information zu gewinnen, ob die Fokussierung zu weit oder zu nah gewählt wurde. Als Klassifikation kann ein künstliches neuronales Netz, Support Vektor Klassifikation, Fuzzy Logic bzw. Fuzzy K-Nearest Neighbor Klassifikator, ein Reinforcement Learning Algorithmus, dienen. Als Beispiel für Bildschärfeunterschiede dient Figur 2.

Ein konkreter Steuerungsansatz für die z-Achse ist per Fuzzy K-Nearest Neighbor Klassifikator zum Beispiel drei Bildaufnahmen mit unterschiedlicher Belichtungszeit hinsichtlich Bildschärfe (SMD) zu klassifizieren. Auf jedes Bild unterschiedlicher Belichtungzeit wird ein Bildschärfealgorithmus angewandt. Gleiches gilt für eine Klassifikation hinsichtlich der Bildschärfe der Bildaufnahmen und den daraus extrahierten Hauptkomponenten aus einer Bildsequenz mit unterschiedlichen Bildschärfen. Für diese Bildaufnahmen mit unterschiedlichen Belichtungszeiten war es möglich ein Klassifikationsergebnis zu erzielen, das anzeigte ob die Fokussierung der Beobachtungskamera 102 zu weit, optimal oder zu nah gewählt wurde. Dabei zeigte sich, dass die lange Belichtungszeit eine hohe Wahrscheinlichkeit beträgt, wenn die Fokuslage gegenüber der Bearbeitungsfläche 104 zu weit entfernt sprich die Distanz zu groß gewählt wurde. Ist die Distanz zum Werkstück zu gering, oder die Fokuslage liegt zu weit hinter der Bearbeitungsfläche 104 für ein scharfes Bild, so hat die kurze Belichtungszeit eine höhere Klassenwahrscheinlichkeit. Auf diese Weise kann ein HDR Verfahren mit einer automatischen Fokussierung verbunden werden, indem ein Klassifikator anhand von Bildmerkmalen unterscheidet in welche Richtung die Fokuslage beeinflusst werden muss. Im konkreten Fall wurde zur Klassifikation die Klassenzugehörigkeitswahrscheinlichkeit,

$$u_i(x) = \frac{\sum_{j=1}^{k} u_{ij}\left(\frac{1}{\left\|x - x_j\right\|^{\frac{2}{m-1}}}\right)}{\sum_{j=1}^{k}\left(\frac{1}{\left\|x - x_j\right\|^{\frac{2}{m-1}}}\right)}$$

gewählt, wobei *k* die nächsten Nachbarn beschreibt, und *j* die Laufvariable. $u_i(x)$ beschreibt die Wahrscheinlichkeit, dass eine Probe *x* zu einer Klasse *i* gehört, $u_{jx}(x)$ ist die bekannte Wahrscheinlichkeit der *k* betrachteten Nachbarn, und *m* ist ein Skalierungsparameter zwischen 1 und 2. Die Klassenzugehörigkeitswahrscheinlichkeit sinkt mit der relativen Distanz der Probe zu einer Klasse. Die aufgetretenen aufsummierten Klassenwahrscheinlichkeiten einer gut, zu nah, zu fern Klasse können als gewichtete Eingabe für einen PID-Regler (Proportional-Integral-Differential-Regler) für die z-Achse verwendet werden. Für diese Schritte kann explizit auch eine Support Vektor Klassifikation und andere Klassifikationsverfahren wie im Abschnitt zur technischen Kognition beschrieben verwendet werden sowie andere Regelverfahren. Auf jeden Fall kann so die Fokuslage relativ zum Werkstück über die z-Achse eines Laserbearbeitungskopfes 100 gesteuert und geregelt werden.

Die Notwendigkeit eines komplexere Regelansatzes, also nicht nur eine direkte Beziehung zwischen Bildschärfe und Arbeitsfokuslage des Laserbearbeitungskopfes 100 herzustellen, wird nicht nur durch die Wellenlängenunterschiede, Temperaturverläufe u.v.m., sondern auch durch die Bauweise der üblichen Laserbearbeitungsköpfe mit Kollimations- und Fokussier-Linse gegeben. Wird das Beobachtungssystem mit einer reflektierenden Oberfläche zwischen der Kollimations- und Fokussier-Einheit eingebaut, so muss beachtet werden, dass durch die Prozessüberwachungskamera 102 die Veränderung der optischen Einheit der Kollimations-Einheit 106 durch thermische Einflüsse nicht erfasst wird. Daher ist es notwendig auch diese Veränderung bei einem kompensatorischen Ausgleich der Veränderung der Fokuslage durch ein komplexeres Regelverfahren wie in dieser Erfindung vorgeschlagen zu lösen.

Neben der Bildschärfe kann die Temperaturveränderung, $\Delta T$, des Bearbeitungskopfes 100 und damit des optischen Systems ein hinreichendes Kriterium für eine veränderte Fokuslage darstellen. Aus diesem Grund wird diese über einen entsprechenden Sensor 120 im Laserbearbeitungskopf erfasst und kann direkt sowie indirekt in Beziehung mit dem Korrekturwert $\Delta z_f$ gesetzt werden.

Alternativ können noch folgende Parameter für einen Regler oder ein technisch-kognitives System verwendet werden:

Das Zeitintervall, $\Delta t$, das der Arbeitslaser in einem Bearbeitungsschritt eingeschaltet ist, kann zu einer veränderten Fokuslage führen. Aus diesem Grund kann die Laufzeit direkt oder indirekt in Beziehung mit dem Korrekturwert $\Delta_{zf}$ gesetzt werden. Alternativ oder zusätzlich kann auch dieses als ein Merkmal für einen Regler oder ein technisch-kognitives System verwendet werden.

Die Laserleistung, $\Delta P_L$, sprich die Lichtenergie des Laserlichtes, welches den Laserbearbeitungskopf 100 durchläuft kann ebenfalls zu einer veränderten Fokuslage führen. Aus diesem Grund kann die Laserleistung direkt oder indirekt in Beziehung mit dem Korrekturwert $\Delta z_f$ gesetzt werden. Alternativ oder zusätzlich kann auch dieses als ein Merkmal für einen Regler oder ein technisch-kognitives System verwendet werden.

Ein Verlaufsmodell, $M$, kann ebenfalls eine Aussage über eine veränderte Fokuslage treffen. Diese kann gewonnen werden, indem die Kaustik der austretenden Laserstrahlung vor Inbetriebnahme zu unterschiedlichen Laserleistungen und Laufzeiten vermessen wird. Auf diese Weise kann Fokusshift- und Brennfleckdurchmesservariation vermessen werden und ein Modell linear angenähert werden, welches direkt oder indirekt in Beziehung mit dem Korrekturwert $\Delta z_f$ gesetzt werden. Alternativ oder zusätzlich kann auch dieses als ein Merkmal für einen Regler oder ein technisch-kognitives System verwendet werden.

Ähnlich wie das Verlaufsmodell kann ein kognitiver Erfahrungswert, $C_{OG}$, gefunden werden. Dieser repräsentiert gelernte Erfahrungen auf Basis statistischer und selbstlernender Methoden eines kognitiv-technischen Systems, welches im folgenden genauer erläutert wird. Dieser Erfahrungswert kann direkt oder indirekt in Beziehung mit dem Korrekturwert $\Delta z_f$ gesetzt werden.

In Figur 5 ist ein technisch-kognitives System mit entsprechendem Regler dargestellt.

Das wesentliche Funktionsmerkmal dieses Systems ist eine Regelung bzw. Steuerung des Korrekturwertes $\Delta z_f$ auf der Basis von vielen Sensorergebnissen und Eingangssignale. Es dient dazu das gewünschte von einem Experten definierte Ergebnis zu erreichen, indem es viele Eingangssignale überwacht, klassifiziert und gelerntes Wissen zur Signalverarbeitung verwendet.

Das System wird deshalb technisch-kognitiv genannt, da es hoch adaptive Fähigkeiten besitzt, die einer menschlichen oder natürlichen Lern-, Problemlösungs- und Entscheidungsfähigkeit ähneln. Ein System ist dann technisch-kognitiv, wenn es aus mindestens zwei Sensoreinheiten oder einer mindestens mehrdimensionaler Sensordatenmenge mindestens eine Aktorik und ggf. die Sensordatenakquise in einer Weise bedient, die zuvor nicht genau von einem menschlichen Experten vorgegeben wurde, sondern auf der Basis bereits vorhandener bzw. aufgezeichneter und analysierter bzw. gelernter Erfahrungsdaten, die aus einer größeren Sensordatenmenge über Merkmalserkennung und Dimensionsreduktion extrahiert wurden, abgelegt in einer Datenbanken sowie einer Zielvorgabe ggf. mit Lösungsansatz, die entweder direkt von einem menschlichen Bediener vorgegeben wurde oder daraus abgeleitet resultiert worden ist. Ein technisch-kognitives System arbeitet also an Lösungs- bzw. Steuerungs- oder Regelungsansätzen bis es eine Zielvorgabe erreicht und überwacht anschließend die Zielerreichung um bei auftretender Nichterreichung wieder die gelernten Lösungsansätze zu überarbeiten. Figur 6 beschreibt ein derartiges technisch-kognitives System schematisch. Ein derartiges System kann zur Steuerung von Robotern, Produktionsanlagen und eben auch Laserbearbeitungssystemen eingesetzt werden.

Zur genaueren Beschreibung werden nun die einzelnen Elemente und Verfahren dargestellt, die zur Verwendung kommen.

Als Sensorik 124 kann prinzipiell jeder Sensor verwendet werden, der eine Sensordatenausgabe ermöglicht. Konkret sind dies beispielsweise Mikrophone oder Körperschallaufnehmer, Kameras, Fotodioden, Taster, technische Auswerte und Überwachungssignale sowie Aktorikparameter, wie beispielsweise die Laserleistung.

Merkmalsextrahierung und Dimensionsreduktion: Hierbei können alle Verfahren verwendet werden, die die Datenmenge reduzieren und den Informationsgehalt weitestgehend erhalten. Konkret sind hier die Hauptkomponentenanalyse (PCA), Independent Component Analyse (ICA), die Wavelet-Analyse, Fourier, Fast-Fourier und Laplace Analyse, Merkmals- und Objekterkennungsverfahren, Isomap, Locally-Linear Embedding, Künstliche Neuronale Netze, Multidimensional Scaling u.v.m..

Die reduzierte Datenmenge kann als eine Punktwolke eines multi-dimensionalen Raumes interpretiert werden, die aus einem höher dimensionalen Raum gewonnen wurde. Durch die Reduzierung der Daten ist es möglich diese in endlicher Zeit mit zuvor aufgezeichneten und klassifizierten bzw. gelernten Datenmengen zu vergleichen. Bei dieser Klassifikation kann festgestellt werden, ob die neuen Sensordaten bereits aufgezeichneten Sensordaten ähneln und dieser Ähnlichkeit eine Wahrscheinlichkeit zugeordnet werden. Wird ein definierter Schwellwert für eine Ähnlichkeitswahrscheinlichkeit einer zuvor aufgezeichneten Datenmenge überschritten, so kann der darunter zuvor hinterlegte Lösungs- bzw. Steuerungs- bzw. Regelungsansatz verfolgt werden. Wird der Schwellwert für eine Ähnlichkeitswahrscheinlichkeit zu zuvor gelernten Datenmengen überschritten, so hat das System eine neue Situation.

Die Verhaltensweise für eine neue Situation kann entweder durch Erfragen bei einem menschlichen Bediener gelernt werden oder aus den bisherigen Daten und Lösungsstrategien nach dem Ähnlichkeitsprinzip ausprobiert werden. Hier kommen selbstlernende Algorithmen zum Einsatz, die nach einer Zielvorgabe anschließend nach einem Ausprobieren eines selbst erschlossenen Ansatzes überprüfen, ob ein Ziel erreicht wurde und den gewählten Lösungsansatz entsprechend bewerten. Für die Klassifikation, Ablegung von Erfahrungswerten und Lösungsstrategien sowie als selbstlernende Algorithmen können die folgenden Verfahren eingesetzt werden: Support Vector Machines, Support Vector Klassifikation, Fuzzy Logic, Informations Fuzzy Netze, Fuzzy K-Nearest Neighbor Klassifikator, K-Nearest Neighbor Klassifikator, Reinforcement Learning, Bayesian Networks und Bayesian Knowledge Datenbanken, Naive Bayes Klassifikatoren, Hidden Markov Ketten, Künstliche Neuronale Netze und Backpropagation, Regressions Analyse, genetische Programmierung oder Entscheidungsbäume.

Die nach der Klassifikation resultierende Lösungsstrategie, bzw. eine Regler- oder Aktoriksteuerung kann einfach ausgeführt werden, sie kann aber auch die Art der Datengewinnung steuern. Wird zum Beispiel kein Schwellwert für eine bekannte Datenmenge erreicht, so kann die Art der Datengewinnung verändert werden. Beispielsweise kann dies durch Anpassung einer Wavelet Analyse hin auf neue Frequenzbereiche oder durch Wechsel von PCA zu ICA erfolgen.

Die meisten Laserschweißköpfe bieten die Möglichkeit, eine koaxiale Kamera anzuschließen, welche die gleiche Fokussierlinsen wie der Laserstrahl verwendet. Somit verändert eine Fokusverschiebung, welche durch Erwärmung der Linsen erzeugt wird und den Laserstrahl beeinflusst, auch die aufgenommenen Videodaten. In dem vorgeschlagenen Ansatz wird die Schärfe der aufgenommenen Videodaten dazu verwendet, eine Fokusverschiebung und Abstandsveränderung relativ zu der Werkstückoberfläche zu überwachen. Eine Abstandssteuerung wird mittels einer kontrollierbaren z-Achse erreicht. Ein zusätzliches künstliches neuronales Netzwerk ermöglicht die Korrektur von unkompensierten Fehlern, wie beispielsweise Verschiebungen, welche durch die Kollimatoroptik verursacht werden. Erfindungsgemäß werden Prozessfehler, welche durch Linsenerwärmung verursacht werden, reduziert und die Prozessqualität und andere Sensordatenerfassungen verbessert.

Fahrzeugherstellungslinien werden für jedes unterschiedliche Fahrzeugmodell maßgeschneidert, was zu langen Konfigurationszeiten und Ausfallzeiten führt, wenn ein oder mehrere Werkzeuge falsch konfiguriert sind. Dies führt zu einem wachsenden Bedürfnis für flexible Herstellungslinien mit selbst-lernenden Bearbeitungswerkzeugen, die in der Lage sind, sich selbstständig an neue Prozesse und Prozessumgebungen anzupassen. Dies können entweder Werkzeuge, welche einen weiten Bereich an Steuerbarkeit bieten, oder intelligente Systeme sein, welche erlerntes Wissen verwenden, um neue Aufgaben zu erfüllen.

Laserstrahlschweißen gehört zu den technisch anspruchvollsten Prozessschritten in heutigen industriellen Herstellungslinien. Aufgrund ihrer hauptsächlichen Verwendung bei der Herstellung des Fahrzeugkörpers muss eine hohe Genauigkeit und Verlässlichkeit garantiert werden. Somit benötigen kleine Änderungen der Prozesseigenschaften eine Neukalibrierung des Systems, um fehlerhafte Teile zu vermeiden.

Die Erfindung betrifft die Kompensation eines thermischen Linseneffekts, auch bekannt als Fokusverschiebung. Aufgrund der kontinuierlichen Energieabsorption des optischen Systems innerhalb des Laserschweißkopfes können sich die Laserstrahleigenschaften während des Bearbeitungs- und Schweißprozesses verändern. Die Charakteristik der Fokusverschiebung kann im Labor errechnet werden. Diese Ergebnisse sind jedoch kaum anwendbar auf ein reales Produktionsumfeld, da hier jedes System seine eigene Konfiguration und eine Vielzahl von unbekannten Einflussgrößen aufweist.

Obwohl optische Komponenten aus geschmolzenen Silikaten ($SiO_2$) eine geringere Absorptionsrate bei einer Wellenlänge von 1064 nm, emittiert von einer Nd:YAG Laserquelle, aufweisen, führt der Anstieg der Laserleistung zu einem Anstieg der Fokusverschiebung, was Gegenmaßnahmen erfordert. Letzte Ergebnisse befassen sich mit verbesserten Optiken mit neuen Materialien wie beispielsweise Zinksulfid (ZnS)-basierten Linsen, die eine höhere thermische Leitfähigkeit aufweisen. Dieser Ansatz vermeidet jedoch nicht die Fokusverschiebung, sondern stellt einen konstanten Brennfleckdurchmesser sicher. Ähnliche Ergebnisse können mit überarbeiteten Strukturen erhalten werden, welche eine verbesserte optische Korrektur des Laserstrahls ermöglichen.

Andere Ansätze zielen darauf ab, die Brennfleckposition durch Erfassung von Sensordaten ohne Veränderung der Prozessoptik zu messen und zu steuern. Diese Ansätze basieren hauptsächlich auf einer Analyse und einem Vergleich von optischen Emissionen für unterschiedliche Spektralbereiche und profitieren von der chromatischen Aberration.

Als Folge davon kann der relative Abstand der Prozessoptik zu dem Werkstück gesteuert werden, durch welche Positionierungs- und Fokussierverschiebungsfehler vermieden werden können. Durch Verwendung von steuerbaren Optiken können kleine Oszillationen des Prozesses erreicht werden, was eine Abschätzung der Brennfleckposition relativ zu der Werkstückoberfläche ermöglicht.

Da diese Techniken Prozessemissionen verwenden, hängen diese stark von dem überwachten Prozess ab und erfordern somit eine unterschiedliche Konfiguration für jeden behandelten Prozess. Um dieses Problem handhaben zu können, wurde ein erster Schritt in Richtung von selbstlernenden Techniken mit künstlichen neuronalen Netzwerken durchgeführt, die verwendet werden, um optische Emissionen zu klassifizieren. Das Training wurde durch Verändern des Abstands der Fokussieroptik zu dem Werkstück für verschiedene Aufbauten durchgeführt.

In dem erfindungsgemäßen Ansatz muss ein konstanter Abstand zu dem Werkstück sichergestellt und angepasst werden, wenn eine Fokusverschiebung auftritt oder der Abstand zu dem Werkstück sich ändert. Dies kann durch die Analyse der aufgenommenen Videodaten von einer koaxialen Videokamera erreicht werden. Die Kamera verwendet teilweise die gleiche Fokussieroptik wie der Laserstrahl und unterliegt daher einer ähnlichen Fokusverschiebung, welche in einem unscharfen Bild resultiert. Der Einbau einer steuerbaren Optik für die Kamera erlaubt die Berechnung eines Steuersignals für die z-Achsen-Verstellvorrichtung, um wieder ein scharfes Bild zu erlangen.

Zuerst wird im Folgenden eine kurze Beschreibung der Fokusverschiebung als Einleitung gegeben, gefolgt von einer Präsentation der getesteten Schärfe-Abschätzungstechniken, einem künstlichen neuronalen Netzwerk (ANN), und dem gesamten Systemaufbau. Als zweites werden durchgeführte Experimente beschrieben, welche die Messungen von Fokusverschiebungen, die Analyse von während einer Distanzvariation erhaltenen Bilddaten, und von dem ANN erhaltene Ergebnisse umfassen.

Zunächst soll der theoretische Hintergrund erläutert werden.

Die Fokusverschiebung muss beschrieben und quantifiziert werden, um Gegenmaßnahmen zu entwickeln. Es wird ein einfacher optischer Aufbau mit einem Bearbeitungskopf angenommen, welcher nur eine Kollimator- und eine Fokussierlinse aufweist. Basierend auf deren optische Eigenschaften kann der Grad der Fokusverschiebung berechnet und somit die benötigte Genauigkeit der z-Achsensteuerung abgeschätzt werden. Die Steuerung basiert auf Algorithmen, die die Schärfe berechnen, einer Maximumsuche und der Veränderung des Steuersignals mittels eines PID-Reglers. Um Unterschiede zwischen dem Strahlengang des Laserstrahls und dem Kamerabild zu handhaben, welches durch Linsenerwärmung verursacht wird, wird ein künstliches neuronales Netz (ANN) implementiert.

Laserschweißköpfe enthalten einen Satz von Linsen, welcher dazu verwendet wird, den eingehenden Strahl zu kollimieren und in einem spezifischen Abstand zu fokussieren. Die Positionierung des Brennflecks relativ zu der Werkstückoberfläche hängt von der Anwendung ab. Angenommen, eine Faser hat einen Durchmesser von $d_f$, dann kann der Durchmesser des Brennpunkts $d_0$ mit $d_0 = f_{foc}/f_{col} * d_f$ berechnet werden. Entsprechend beeinflussen die Brennweiten die Größe und die Position des Brennpunkts relativ zu den Bearbeitungsoptiken.

Die Brennweite f einer dünnen Linse kann berechnet werden durch:

$$\frac{1}{f} = (n-1)\left(\frac{1}{R_1} - \frac{1}{R_2} + \frac{(n-1)d}{nR_1R_2}\right)$$

Es folgt daraus, dass die Brennweite der Linse von dem Brechungsindex n und den Radien $R_i$ abhängt. Beide Terme hängen von der Temperatur des verwendeten Materials ab. Für einen Kaltstart des Systems kann angenommen werden, dass die Linsen auf Umgebungstemperatur liegen. Während der Verarbeitung absorbieren die Linsen einen gewissen Anteil der Strahlleistung und erhöhen ihre Temperatur. Diese Änderung $\Delta T$ führt zu einer Veränderung des Brechungsindex $\Delta n$ definiert durch dn/dT. Für geschmolzenes Silikat liegen die Werte von dn/dT im Bereich von $10^{-5}$/K. Der Brechungsindex bei Wellenlängen von 1064 nm liegt bei 1.4496 bei 20°C und steigt auf 1.4503 bei 100°C. Die Änderung der Radien wird verursacht durch Ausdehnung des Materials, die durch Anwendung des linearen thermischen Expansionskoeffizienten $\alpha$ angenähert werden kann. Da der thermische Linseneffekt sowohl die Kollimator- als auch die Fokussieroptik beeinflusst, kann der Vergrößerungsterm $f_{foc}/t_{col}$ konstant bleiben, wenn die Optiken richtig entworfen sind. Eine übliche Annäherung der Fokusverschiebung ist

$$\Delta f = -\frac{\Delta P_{abs}}{2\pi k_w}\frac{f^2}{R_L^2}\frac{dn}{dT}$$

wobei $\Delta P_{abs}$ die absorbierte Leistung, $k_w$ die thermische Leitfähigkeit und $R_L$ der Linsendurchmesser ist. Ein Anstieg in der Temperatur verringert die Brennweite, was eine Neupositionierung des Schweißkopfes erfordert.

Die Fokusverschiebungen können auf verschiedene Arten gemessen werden. Eine übliche Methode ist eine schicht-basierte Strahlanalyse, in welcher das Leistungsdichteprofil für verschiedene Abstände zu der Verarbeitungsoptik erfasst wird. Um einen Vergleich der Fokusverschiebungen für verschiedene Optiken zu ermöglichen, wird eine Normalisierung mit der entsprechenden Rayleigh Länge $z_{RF}$ angewendet. Diese definiert den Abstand von dem Brennpunkt, bei welchem der Strahldurchmesser sich um einen Faktor $\sqrt{2}$ ändert. Dies führt zu folgender Formel:

$$\frac{\Delta f}{z_{RF}} = \frac{f_F(t,P_L) - f_F(0)}{z_{RF}(t,P_L)}$$

Der Einfluss der Zeit t ist schwieriger zu beschreiben und hängt von einem großen Satz von externen Parametern ab, wie beispielsweise dem Kühlsystem, atmosphärischen Eigenschaften und der thermischen Leitfähigkeit der Linsen. Es gibt Ergebnisse, die zeigen, dass es bis zu 15 Minuten dauert, bis die Fokusverschiebung gegen einen bestimmten Wert konvergiert. Darüber hinaus zeigte sich, dass ein Langzeiteinfluss über mehrere Monate beobachtet werden kann.

Schutzfenster, welche zwischen den Optiken und dem Werkstück angeordnet sind, sollten den optischen Strahlengang nicht beeinflussen, sie können jedoch trotzdem die Position des Brennpunkts verändern. Auch hier führt die Leistungsabsorption zu einer Veränderung der geometrischen Eigenschaften und des Brechungsindex des Schutzfensters.

Im Folgenden sollen nun Autofokustechniken beschreiben werden.

Die meisten der heutigen Bildaufnahmevorrichtungen sind mit einer Autofokussiertechnik ausgerüstet, die ermöglicht, ein scharfes Bild zu erhalten, auch wenn der Objektabstand unbekannt ist. Drei verschiedene Algorithmen erlauben den Erhalt eines Werts, welcher die Bildschärfe beschreibt: Frequenzanalyse mittels Fast Fourier Transformation (FFT), die Summen-Modulus-Difference (SMD) Technik, und der Sobeloperator unter Verwendung der Tenengrad-Methode. Diese Operatoren sind folgendermaßen definiert:

$$i_x = \frac{1}{4}\begin{bmatrix} -1 & 0 & 1 \\ -2 & 0 & 2 \\ -1 & 0 & 1 \end{bmatrix}, \textit{ und } \quad i_y = \frac{1}{4}\begin{bmatrix} 1 & 2 & 1 \\ 0 & 0 & 0 \\ -1 & -2 & -1 \end{bmatrix}$$

Die Operatoren werden auf jedes Pixel des Bildes angewandt. Werte von Q, wobei $Q = i_x^2 + i_y^2$, welche größer als eine definierte Schwelle T sind, werden aufsummiert, was in einem skalaren Wert S resultiert, der mit der Bildschärfe in Bezug steht. Der SMD-Algorithmus besitzt vereinfachte Operatoren und nutzt auch keinen Schwellenwert:

$$i_x = \begin{bmatrix} -1 & 1 \end{bmatrix}, \textit{ und } \quad i_y = \begin{bmatrix} -1 \\ 1 \end{bmatrix}$$

Die Wurzel von Q wird extrahiert und aufsummiert, um einen skalaren Wert S zu erhalten. Die Tenengrad-Technik und SMD können verwendet werden, um in einfacher Weise in zellulären neuronalen Netzwerken (CNN) implementiert zu werden, wie sie in Bildsensoren zu finden sind, wobei die FFT-Technik für Leistungsqualitätsvergleiche verwendet wird.

Keine dieser Techniken erlaubt eine Bestimmung, ob bereits das schärfste Bild erreicht ist, oder in welche Richtung die Fokussieroptik verstellt werden muss. Somit müssen zumindest zwei Bilder erfasst werden, um ein Steuersignal für die Fokussieroptiken zu erlangen. In einer erfindungsgemäßen Ausgestaltung ist eine Fokussierlinse vor der Bildaufnahmevorrichtung konstant innerhalb ihres Arbeitsbereichs ansteuerbar. Somit resultiert die Erfassung und die Verarbeitung der Bilder in einer Kurve mit einem globalen Maximum $S_{max}$. Die Fokussierlinsenposition, für welche dieses Maximum erreicht wird, ermöglicht den Erhalt des Bildes mit der größten Schärfe.

Im Folgenden werden künstliche neuronale Netzwerke beschrieben.

Durch die Verwendung von künstlichen neuronalen Netzwerken kann die komplexe Beziehung zwischen Eingabe- und Ausgabesignalen modelliert werden. Der Begriff Netzwerk bezieht sich auf ein Ensemble von Knotenpunkten, welche in verschiedenen Schichten sortiert sind, die zwischen den Eingabe- und Ausgabeschichten verbunden sind. Jeder Knotenpunkt ist mit einem Satz von Knotenpunkten von der für die Eingabesignale verwendeten vorherigen Schicht verbunden, und die folgende Schicht ist vorgesehen zum Verteilen seines Ausgabesignals. Die charakteristischen Eigenschaften eines Knotenpunkts i sind die Gewichtungen $w_{ij}$ der Eingabesignale $x_j$, ein Bias $\theta_i$ und eine Funktion $f_i$, welche auf die Summe aller Eingabesignale und den Bias angewendet wird. $w_{ij}$, $\theta_i$ und die Menge der Knotenpunkte werden während des Lernprozesses des künstlichen neuronalen Netzwerkes bestimmt. Trainingsdaten bestehen aus einem Satz von Eingabesignalen, für welche das benötigte Ausgabesignal bekannt ist. Dieser Ansatz ist bekannt als überwachtes Lernen, da das Ergebnis des künstlichen neuronalen Netzwerkes bereitgestellt wird, während es konfiguriert wird. Das Training oder der Lernprozess kann als ein Fehlerminimierungsvorgang formuliert werden, in welchem die Knoteneigenschaften verändert werden, bis der Unterschied zwischen berechneter und vorgesehener Ausgabe minimiert ist.

Ein auf diese Weise trainiertes künstliches neuronales Netzwerk kann für eine traditionelle Mustererkennung oder für Klassifizierungsaufgaben verwendet werden. Darüber hinaus kann es für eine nichtlineare Systemidentifikation eingesetzt werden. Das künstliche neuronale Netwerk (ANN) repräsentiert dann ein nichtlineares System, dessen Parameter während des Trainings bestimmt wurden. Das Training kann verbessert werden, wenn ein analytisches Model des zu simulierenden Systems vorliegt.

Im Folgenden wird die z-Achsensteuerung beschrieben.

Laserschweißköpfe können mit einer koaxialen Videokamera ausgestattet werden, welche zwischen der Kollimator- und der Fokussieroptik installiert ist. Weitere Linsen werden benötigt, um ein scharfes Bild des Schmelzbades zu erhalten, während der Brennpunkt korrekt relativ zu dem Werkstück positioniert ist. Eine auftretende Brennpunktverschiebung betrifft sowohl den Laserstrahl, als auch das Videosignal. Durch Veränderung der kameraeigenen Optik kann ein scharfes Bild wieder hergestellt werden. Diese Änderung kann verwendet werden, um den auftretenden Brennweitenfehler zu berechnen und somit die z-Achse zu verstellen, um ein korrekte Brennpunktpositionierung aufrechtzuerhalten.

Es sei hier angemerkt, dass der thermische Linseneffekt, welcher die Kollimatoroptik beeinflusst, unbeobachtet bleibt und somit ein Brennweitenverschiebungsfehler verbleibt. Zusätzlich unterliegt die Brennweitenebene der Kamera einer unterschiedlichen Brennweitenverschiebung als der Laserstrahlbrennpunkt aufgrund der chromatischen Aberration. Beide Begebenheiten können durch Steuerung des Karneralinsen-Nullpunktes ZP reduziert werden, wie im nächsten Abschnitt beschrieben wird.

Im Folgenden wird eine Abstandssteuerung mit einer Regelschleife beschrieben.

In diesem Ansatz wird der Abstand der kameraeigenen Linse zu dem Bildsensor kontinuierlich geändert. Wenn die Linsenposition für das schärfste Bild zwischen zwei aufeinanderfolgenden Intervallen abweicht, hat sich der Abstand zu dem Werkstück geändert, oder eine Linsenerwärmung beeinflusst die Fokussieroptik des Laserstrahls.

Angenommen, eine Kamera nimmt Bilder mit einer Frequenz von 1kHz auf, und eine Linse oszilliert mit 10 Hz, dann kann eine Steuerrate von 20 Hz erreicht werden. Infolgedessen kann $S_{max}$ innerhalb von 50 Bildern gefunden werden. Darüber hinaus ist die Genauigkeit des Systems gleich 100 $\mu$m, wenn die Fokussierlinse einen Bereich für scharfe Bilder von 5 mm ermöglicht. Somit können Brennebenenverschiebungen von 100 $\mu$m oder mehr detektiert werden.

Die anfängliche Nullpunktpositionierung der Kameralinse wird als ZP bezeichnet. Der Unterschied zu der Linsenposition des schärfsten Bildes ist $\Delta$ZP. Es wird verwendet, um einer PID-Regelung zugeführt zu werden, deren Ausgabe zur Steuerung der z-Achsenverstellung übermittelt wird. Der P-Teil wird benötigt, um $\Delta$ZP in ein geeignetes Steuersignal zu skalieren, während die I- und D-Teile verwendet werden, um die Systemantwort zu verändern. Das Gesamtsystem ist in Figur 7 gezeigt.

Im Folgenden wird die Modellierung der Brennpunktverschiebung beschrieben.

Die beschriebene Regelungsschleife reagiert nicht auf Brennweitenverschiebungen der Kollimatoroptik, somit verbleibt ein Brennpunktverschiebungsfehler. Um eine teilweise Kompensation dieses Phänomens als auch des Brennebenenunterschieds zwischen dem Laserstrahl und der Kameraoptik zu ermöglichen, muss eine Korrektur des Kameralinsen-Nullpunkts durchgeführt werden. Da keine direkte Überwachung der Kollimatoroptik möglich ist (abgesehen von dem vorhergehend beschriebenen Temperatursensor an der Kollimatoroptik), wird ein Modell verwendet, um die Brennweitenverschiebung, basierend auf der Kenntnis der angelegten Leistung, des Laserstrahls abzuschätzen.

Der Linsenerwärmungseffekt zeigt stark nichtlineare, zeitabhängige Merkmale. Erfindungsgemäß wird ein künstliches neuronales Netz verwendet, um diese Eigenschaften zu modellieren, wobei dem künstlichen neuronalen Netz eine Vielzahl von Prozessparametern und deren Ableitungen und Integrale in Bezug auf die Zeit zugeführt wird, wie in Figur 8 veranschaulicht ist. Das Training des künstlichen neuronalen Netzwerkes (ANN) benötigt die Eingabe von verschiedenen Laserleistungen mit zeitlichen Änderungen, als auch eine Information über die auftretende Brennpunktverschiebung. Diese Information kann durch das Messen der Strahlkaustik mit entsprechenden Messgeräten erhalten werden, wie später beim experimentellen Teil noch gezeigt wird.

Ist einmal eine Beziehung zwischen der angelegten Laserleistung und der auftretenden Brennpunktverschiebung hergestellt, kann der Nullpunkt der Kameralinse entsprechend der angelegten Laserleistung und anderen Systemparametern gesetzt werden. Es folgt daraus dass die Regelschleife basierend auf der Bildschärfe auf rasche Änderungen des Abstands zwischen dem Bearbeitungskopf und der Optik, als auch auf den Einfluss der Linsenerwärmung auf die Fokussieroptik reagiert, wobei die Verwendung des künstlichen neuronalen Netzwerkes darauf abzielt, Langzeitfehler zu minimieren.

Im Folgenden sollen experimentelle Ergebnisse vorgestellt werden.

Erste Versuche wurden durchgeführt, um die Leistungsfähigkeit und die Eigenschaften von verschiedenen Komponenten des Kontrollsystems zu evaluieren. Eine Analyse der gezeigten Schärfe-Messtechniken wurde durchgeführt, um zu entscheiden, welcher Algorithmus am besten passt. Ein zweiter Satz von Versuchen wurde durchgeführt, um allgemeine Information über Brennpunktverschiebungen für verschiedene Laserschweißköpfe zu erhalten.

Der augenscheinlichste Effekt des thermischen Linseneffekts ist die Fokusverschiebung, welche zu einer Verringerung des Abstands zwischen der Brennebene und der Fokussieroptik führt. Eine Simulation dieses Effekts kann durch Verstellen entlang der z-Achse eines Laserschweißkopfes während des Prozesses erreicht werden, somit ändert sich die relative Position zwischen dem Strahlbrennpunkt und der Werkstückoberfläche. Dies umfasst eine Variation in der Leistungsdichte, wodurch unterschiedliche Schweißresultate während des Prozesses erhalten werden.

Für dieses Experiment wurde eine Verschiebung von -5 mm bis +5 mm an einer 30 cm Überlappschweißung von 0,7 mm Weichstahlplatten durchgeführt, resultierend in einem zu nahen Werkstück in Bezug auf den Schweißkopf am Anfang und einem zu stark entfernten Werkstück in Bezug auf den Schweißkopf am Ende des Prozesses. Ein Video dieses Experiments wurde mittels einer koaxialen CMOS Kamera mit einer Bildrate von 200 fps und einer Auflösung von 192 x 256 Pixeln aufgenommen. Eine externe Kamera nahm Bilder einer optischen Prozessemission auf, wie in Figur 9 gezeigt. Zunächst wurde kein Durchstich erreicht, was zu einer großen aufgeheizten Zone und flammenähnlichen Prozessemissionen führte. Mit Erhöhung des Abstands steigt die Leistungsdichte und führt zu einem Durchstich, beobachtbar durch einen austretenden Funkenflug unterhalb des bearbeiteten Werkstücks. Eine Verschiebung von +5 mm unterbricht nicht den Durchstechvorgang, obwohl kein zufriedenstellendes Ergebnis erhalten wird. Eine anschließende Analyse der Schweißnaht zeigte, dass nur für 1,5 cm eine akzeptable Qualität erhalten werden konnte.

Während dieses Schweißvorgangs mit einer Wegstrecke von 1,5 cm wurde eine Verschiebung des Brennpunkts von 0,5 mm durchgeführt. Somit liegen die Genauigkeitsanforderungen an die Abstandssteuerung bei 0,25 mm oder besser.

Die Schärfenabschätzung wurde für jeden aufgenommen Bildrahmen mit allen drei gezeigten Prinzipien durchgeführt. Das Ergebnis der Algorithmen wurde über 10 Rahmen normalisiert und geglättet, um Hochfrequenzrauschen zu vermeiden. Figur 10 zeigt die resultierenden Kurven. Man stellt fest, dass alle drei Funktionen unterschiedlichen Maxima aufweisen, somit liegen sie alle in einem Bereich von weniger als 0,5 mm z-Achsen Offset. Der Vergleich der FFT- und der SMD-Ergebnisse zeigt ähnliche Eigenschaften, obwohl lokale Maxima weniger betont werden als bei dem letzteren. Die Tenengrad-Funktion zeigt eine niedrigere Variation als die FFT- und SMD-Method und weist ein weniger unterschiedliches lokales Maximum auf, somit ist diese Funktion die am besten geeignete Funktion für das vorgesehene Video.

Im Folgenden wird die Messung der Brennpunktverschiebungen beschreiben.

Ein tiefes Verständnis der auftretenden Brennpunktverschiebungen wurde durch die Analyse des Laserstrahls für verschiedene optische Konfigurationen erhalten. Hierbei wird die Strahlkaustik mittels eines Primes-FokusMonitors überwacht, welcher die Leistungsdichte bei einem Durchfahren der Probe durch den Strahl mit verschiedenen Abständen zum Brennpunkt misst. Eine Wiederholung dieser Messung erlaubt die Analyse von Änderungen im Strahl für konstante oder variierende Laserleistung. Die Ergebnisse können dann verwendet werden, um das künstliche neuronale Netz zu trainieren. Der experimentelle Vorgang bestand aus vielfachen Messungen für verschiedene Laserleistungen und Zeitintervalle, wobei die angelegte Laserleistung bei den Experimenten 1 bis 7 gleich 1 kW, 2 kW, 4 kW, 6 kW, 6 kW, 6kW, 6 kW und die jeweils dazu entsprechende Zeit nach der Initialisierung 0 min., 0 min., 0 min, 0 min., 5 min., 10 min. und 20 min betrug.

Der Messaufbau umfasste einen 6 kW Faserlaser, eine Faser mit einem Durchmesser von 400 $\mu$m und drei verschiedene Optiken: Optik 1 ($f_{col}$ ~ 150 mm; $f_{foc}$ ~ 250 mm), Optik 2 ($f_{col}$ ~ 150 mm; $f_{foc}$ ~ 250 mm) und Optik 3 ($f_{col}$ ~ 125 mm; $f_{foc}$ ~ 200 mm). Der experimentelle Vorgang wurde dreimal für die Optik 1 und Optik 2 und einmal für die Optik 3 durchgeführt.

Figur 11 zeigt den gemittelten Verlauf von $\Delta z/z_{RF}$. Die gemessene Verschiebung für das Experiment 1 wurde bei einer anfänglichen Brennpunktposition $f_F(0)$ durchgeführt. Das Anwachsen der Brennpunktverschiebung für steigende Laserleistung ist klar erkennbar. Die Verschiebungen der Experimente 2 bis 4 (jeweiliger Anstieg um 2 kW der Laserleistung) zeigt eine nahezu lineare Beziehung zu der Laserleistung. Im Falle der Experimente 4 bis 7 (konstante Laserleistung bei 6 kW) scheinen die Verschiebungen um 1 mm nach 10 min. zu konvergieren. Infolgedessen müssen Zeitkonstanten im Bereich von Minuten für die Steuerung in Betracht gezogen werden. Diese Eigenschaften können mittels traditioneller Elemente der Systemtheorie, oder in der Form eines künstlichen neuronalen Netzes modelliert

werden, wie weiter unten beschrieben werden wird, um eine Abschätzung der Brennpunktverschiebung zu berechnen.

Die Rayleigh-Länge $z_{RF}$ lag nahe bei 7,3 mm für die Optik 1 und Optik 2, und bei 6.6 mm für die Optik 3, was zu absoluten Brennpunktverschiebungen von mehr als 0,5 mm bei hohen Laserleistungen führte. Ein Steuerungssystem kann daher zweckmäßig sein, um die resultierenden Herstellungsfehler zu minimieren.

Im Folgenden wird die erfindungsgemäß besonders bevorzugte Fokusverschiebungsabschätzung durch ein künstliches neuronales Netz beschrieben.

Das Verständnis der gemessenen Brennpunktverschiebungen erlaubt die Modellierung der Brennpunktverschiebung in Abhängigkeit von der angelegten Laserleistung. Dies ist zweckmäßig für anfängliche Tests des künstlichen neuronalen Netzwerkes an nichtlinearen Systemen. Die folgende funktionale Beziehung wurde empirisch entwickelt:

$$\frac{\Delta f}{z_{RF}} = \frac{P_L}{10 z_{RF}}\left(1 + 0{,}8\left(1 - e^{-\frac{t}{4}}\right)\right)$$

Es reagiert auf ansteigende und stationäre Laserleistung in gleicher Weise wie die getesteten Optiken des vorhergehenden Abschnitts. Ein Test bei nacheinander angelegten Laserleistungen (1 kW, 2 kW, 4 kW, 6 kW) für 10 min. führte jeweils zu Brennpunktsverschiebungsabschätzungen, wie in Figur 12 gezeigt. Änderungen in der Laserleistung führten zu sofortigen Änderungen der Brennweite, es dauerte jedoch 10 min., bis ein konstanter Wert erreicht war.

Während des nächsten Vorgangs wurde ein künstliches neuronales Netz mit Eingabe- und Ausgabedaten trainiert, die von der oben aufgeführten Formel erhalten wurden.

$$P_L, \int P_L dt, \iint P_L dt dt, \frac{\partial P_L}{\partial t} \, und \, \frac{\partial^2 P_L}{\partial t^2}$$

dienten als Eingabe, und $\Delta f$ als Ausgabe. Der Test wurde mit der gleichen Laserleistung durchgeführt wie bei dem vorhergehenden Versuch. Figur 12 zeigt, dass das künstliche neuronale Netz zu sehr ähnlichen Ergebnissen wie im empirischen Modell führte. Daher kann angenommen werden, dass die Verwendung eines künstlichen neuronalen Netzes erfindungsgemäß ausgezeichnet geeignet ist, nichtlineare Systeme zu simulieren.

Für die Verwendung in realen Umgebungen müssen die Trainingsmerkmale von erfassten Brennpunktverschiebungsmessungen erhalten werden, die an dem Bearbeitungskopf durchgeführt werden, der anschließend zu steuern ist. In diesem Falle würde die Zahl der durchgeführten Brennpunktverschiebungsmessungen nicht erlauben, zufriedenstellende Ergebnisse zu erlangen, da das Training des gesamten künstlichen neuronalen Netzes auf wenige Proben beschränkt würde.

Im Folgenden sollen die Schlussfolgerungen aus den vorgestellten Ergebnissen angegeben werden.

Die Brennpunktverschiebung eines Laserschweißkopfes kann zu unbefriedigenden Schweißresultaten führen, und somit werden Brennpunktverschiebungs-Kompensationsmechanismen benötigt, um auch bei ansteigenden Laserleistungen gleichbleibende Qualitätsstandards zu erreichen.

Eine kontinuierliche Steuerung der kameraeigenen Optik und eine weitere Bildverarbeitung mittels Schärfe-Feststellungs-Algorithmen erlaubt zu bestimmen, ob der Abstand zu dem Werkstück richtig liegt oder nicht, und wie die z-Achse verstellt werden muss. Die Tenengrad-Schärfeabschätzungstechnik zeigte erfindungsgemäß die am meisten brauchbaren Resultate.

Eine experimentelle Messung der Fokusverschiebungen bei drei verschiedenen Bearbeitungsköpfen zeigte, dass eine Kompensation bei angelegten Laserleistungen von mehr als 4 kW nötig ist, wenn Brennpunktverschiebungen auf 0,6 mm limitiert werden sollen. Basierend auf diesen Experimenten wurde ein empirisches Modell der Brennpunktverschiebung konstruiert, die als Trainingsdatenquelle für ein künstliches neuronales Netz diente. Weitere Simulationen bestätigten, dass erfindungsgemäß das künstliche neuronale Netz verwendet werden kann, um nicht-lineare Systembeziehungen zu modulieren.

Die weitere Arbeit zielt auf die Entwicklung von Hardware, wie beispielsweise steuerbare Kameraoptiken und hochgenaue z-Achsenverstellungen ab. Zusätzlich soll der Einfluss von optischen Fehlern reduziert werden.

## Patentansprüche

1. Laserbearbeitungskopf (100) zur Bearbeitung eines Werkstücks mittels eines Arbeitslaserstrahls (108), mit

- einer Fokussieroptik (114) zur Fokussierung des Arbeitslaserstrahls (108) auf die Werkstückoberfläche (104) oder auf eine relativ zur Werkstückoberfläche (104) definierte Lage, **gekennzeichnet durch**
- eine Kamera (102) mit einer davor im Strahlengang angeordneten Abbildungsoptik (116) zur Beobachtung eines Bearbeitungsbereiches des Werkstücks, das mittels des Arbeitslaserstrahls (108) bearbeitet wird, und
- eine Auswerteeinheit (122), die dazu ausgebildet ist, mittels eines Verstellweges ($\Delta d_{KL}$) der Abbildungsoptik (116) in Richtung der optischen Achse, der dazu nötig ist, bei einer Verschiebung des Brennpunkts der Fokussierlinse (114) das Kamerabild wieder scharf einzustellen, einen Korrektur-Verstellweg ($\Delta z_{OS}$, $\Delta z_B$) zu berechnen, der eine Brennpunktverschiebung der Fokussieroptik (114) relativ zur Werkstückoberfläche (104) oder zu einer relativ zur Werkstückoberfläche (104) definierten Lage kompensiert.

**2.** Laserbearbeitungskopf (100) nach Anspruch 1, ferner mit einer Beleuchtungsvorrichtung, deren Licht koaxial in den Strahlengang des Laserbearbeitungsstrahls (108) über einen Strahlteiler eingekoppelt ist, um den Bearbeitungsbereich des Werkstücks zu beleuchten.

**3.** Laserbearbeitungskopf (100) nach Anspruch 1 oder 2, **dadurch gekennzeichnet, dass** die Kamera (102) dazu ausgebildet ist, zur Bildgewinnung ein High Dynamic Range (HDR)-Verfahren einzusetzen.

**4.** Laserbearbeitungskopf (100) nach einem der vorstehenden Ansprüche, **dadurch gekennzeichnet, dass** die Auswerteeinheit (122) dazu ausgebildet ist, zur Ermittlung des Verstellwegs ($\Delta d_{KL}$) der Abbildungsoptik (116) in Richtung der optischen Achse, der dazu nötig ist, das Kamerabild wieder scharf einzustellen, ein Verfahren zur Bildschärfefindung einzusetzen, welches ein Varianz-Verfahren, ein Sum Modulus Difference (SMD)-Verfahren, ein Signalleistungs (SL)-Verfahren, ein Fourier-AnalyseVerfahren, ein Laplace-Operator oder Laplace-Fokussierungsfunktions-Verfahren, oder ein Fokussierung durch Feature Point bzw. Objekt Tracking-Verfahren umfasst.

**5.** Laserbearbeitungskopf (100) nach einem der vorstehenden Ansprüche, **dadurch gekennzeichnet, dass** die Auswerteeinheit (122) dazu ausgebildet ist, bei der Berechnung des Korrektur-Verstellwegs ($\Delta z_{OS}$, $\Delta z_B$) der Fokussieroptik (114) aus dem Verstellweg ($\Delta d_{KL}$) der Abbildungsoptik (116) Fokussierungsunterschiede der Abbildungsoptik (116) und der Fokussierungsoptik (114) aufgrund der unterschiedlichen Wellenlängen des Beobachtungssystems und der verwendeten Arbeitslaserlichtwellenlänge mit einzuberechnen.

**6.** Laserbearbeitungskopf (100) nach einem der vorstehenden Ansprüche, ferner mit einem Aktuatorsystem, welches dazu ausgebildet ist, die Position des Laserbearbeitungskopfes (100) relativ zu einer Bearbeitungsoberfläche (104) des Werkstücks oder bewegliche Teile des optischen Systems anzupassen, um zur Kompensation der Brennpunktverschiebung der Fokussieroptik (114) den Korrektur-Verstellweg ($\Delta z_{OS}$, $\Delta z_B$) zu durchfahren.

**7.** Laserbearbeitungskopf (100) nach Anspruch 6, **dadurch gekennzeichnet, dass** die Auswerteeinheit (122) dazu ausgebildet ist, mittels des Aktuatorsystems die Lage des Brennpunkts der Fokussieroptik (114) durch Durchfahren eines Korrektur-Verstellwegs ($\Delta z_{OS}$, $\Delta z_B$) direkt zu regeln.

**8.** Laserbearbeitungskopf (100) nach einem der Ansprüche 1 bis 6, **dadurch gekennzeichnet, dass** die Auswerteeinheit (122) ferner ein kognitives System aufweist, welches durch einen Lernprozess die Verstellung der Fokussieroptik (114) abhängig von einer Bearbeitungszeit oder von Bearbeitungssituationen so regelt, dass der Arbeitsfokus des Laserstrahls (108) stets auf der Werkstückoberfläche (104) oder in einer relativ zur Werkstückoberfläche (104) definierten Lage liegt.

**9.** Laserbearbeitungskopf (100) nach Anspruch 8, ferner mit zumindest einer zu der Kamera (102) zusätzlichen Sensoreinheit (124), wobei die Auswerteeinheit (122) dazu ausgebildet ist, die Verstellung der Fokussieroptik (114) in Bezug auf die BearbeitungsOberfläche (104) des Werkstücks auf der Basis von den Signalen der Kamera (102) und der zumindest einen zusätzlichen Sensoreinheit (124) zu regeln oder zu steuern.

**10.** Laserbearbeitungskopf (100) nach Anspruch 9, **dadurch gekennzeichnet, dass** die zumindest eine Sensoreinheit (118, 120, 124) zumindest ein Mikrophon oder Körperschallaufnehmer, zumindest eine Zusatzkamera, zumindest eine Fotodiode, ein Taster sowie Sensoren zur Erfassung von technischen Auswerte- und Überwachungssignalen sowie Aktorikparametem wie der Laserleistung ist.

**11.** Laserbearbeitungskopf (100) nach einem der Ansprüche 8 bis 10, ferner mit einem Temperatursensor (118) an der Fokussieroptik (114) und/oder einem Temperatursensor (120) an einer Kollimatoroptik (106) zur Erfassung der Temperatur der zugehörigen Optik.

**12.** Laserbearbeitungskopf (100) nach Anspruch 11, **dadurch gekennzeichnet, dass** die Auswerteeinheit (122) dazu ausgebildet ist, die von dem Temperatursensor (120) erfasste Temperatur der Kollimatoroptik (106) einem Lernprozess zuzuführen, um die Verstellung der Fokussieroptik (114) abhängig von der Bearbeitungszeit oder der Bearbeitungssituation zu regeln.

**13.** Laserbearbeitungskopf (100) nach einem der Ansprüche 8 bis 12, **dadurch gekennzeichnet, dass** die Auswerteeinheit (122) weiter dazu ausgebildet ist, ein Zeitintervall ($\Delta t$), eine Laserleistung ($P_L$), ein Verlaufsmodell (M) oder einen kognitiven Erfahrungswert ($C_{OG}$) in einen Lernprozess zur Verstellung der Fokussieroptik (114) abhängig von der Bearbeitungszeit oder von der Bearbeitungssituation aufzunehmen.

**14.** Laserbearbeitungskopf (100) nach einem der Ansprüche 8 bis 13, **dadurch gekennzeichnet**, das die Auswerteeinheit (122) dazu ausgebildet ist, für die Regelung oder Steuerung eines Verstellwegs ($\Delta z_{OS}$, $\Delta z_B$) der Fokussieroptik (114) auf der Basis von Signalen zumindest einer Sensoreinheit (124) Klassifikationsalgorithmen oder selbstlernende Algorithmen einzusetzen wie Support Vector Machines, Support Vector Klassifikation, Fuzzy Logic, Informations Fuzzy Netze, Fuzzy K-Nearest Neighbor Klassifikator, K-Nearest Neighbor Klassifikator, Reinforcement Learning, Bayesian Networks und Bayesian Knowledge Datenbanken, Naive Bayes Klassifikatoren, Hidden Markov Ketten, künstliche neuronale Netze und Backpropagation, Regressions-Analyse, genetische Programmierung oder Entscheidungsbäume.

**15.** Verfahren zur Kompensation der Fokuslagenänderung bei einem Laserbearbeitungskopf (100) nach einem der vorstehenden Ansprüche, mit den Schritten

- Fokussieren des Arbeitslaserstrahls (108) auf ein Werkstück, um einen Schweiß- oder Schneid-Vorgang an dem Werkstück durchzuführen,
- Bewegen des Brennpunkts des Arbeitslaserstrahls (108) entlang einer Bearbeitungslinie auf einer Bearbeitungsoberfläche (104), wobei der Abstand zwischen Fokussieroptik (114) und Bearbeitungsoberfläche (104) des Werkstücks konstant gehalten wird,
- Kompensieren einer Brennpunktverschiebung der Fokussieroptik (114) durch Verstellen des Abstands zwischen Fokussieroptik (114) und Bearbeitungsoberfläche (104) des Werkstücks um einen Korrektur-Verstellweg ($\Delta z_{OS}$, $\Delta z_B$), wobei der Korrektur-Verstellweg ($\Delta z_{OS}$, $\Delta z_B$) der Fokussieroptik (114) mittels eines Verstellweges ($\Delta d_{KL}$) der Abbildungsoptik (116) in Richtung der optischen Achse berechnet wird, der dazu nötig ist, bei einer Verschiebung des Brennpunkts der Fokussieroptik (114) das Kamerabild der Kamera (102) wieder scharf einzustellen.

**16.** Verfahren nach Anspruch 15, **dadurch gekennzeichnet, dass** für die Berechnung des Verstellwegs ($\Delta z_{OS}$, $\Delta z_B$) der Fokussieroptik (114) weiter kognitive Systeme eingesetzt werden, die durch einen Lernprozess die Verstellung der Fokussieroptik (114) abhängig von einer Bearbeitungszeit oder von Bearbeitungssituationen so regeln, dass der Arbeitsfokus des Arbeitslaserstrahls (108) stets auf der Werkstückoberfläche (104) oder in einer relativ zur Werkstückoberfläche (104) definierten Lage liegt.

## Claims

**1.** A laser processing head (100) for processing a workpiece by means of a working laser beam (108), comprising

- a focusing optical unit (114) for focusing the working laser beam (108) onto the workpiece surface (104) or onto a position defined relative to the workpiece surface (104) **characterized by**,
- a camera (102) with an imaging optical unit (116) arranged upstream thereof in the beam path and serving for observing a processing region of the workpiece which is processed by means of the working laser beam (108), and
- an evaluation unit (122), which is designed to calculate a correction adjustment travel ($\Delta z_{OS}$, $\Delta z_B$) which compensates for a focal point displacement of the focusing optical unit (114) relative to the workpiece surface (104) or to a position defined relative to the workpiece surface (104) by means of an adjustment travel ($\Delta d_{KL}$) of the imaging optical unit (116) in the direction of the optical axis, which is necessary for focusing the camera image again in the event of a displacement of the focal point of the focusing lens (114).

**2.** The laser processing head (100) as claimed in claim 1, furthermore comprising an illumination device, the light from which is coaxially coupled into the beam path of the laser processing beam (108) by means of a beam splitter in

order to illuminate the processing region of the workpiece.

3. The laser processing head (100) as claimed in claim 1 or 2, **characterized in that** the camera (102) is designed to use a high dynamic range (HDR) method in order to obtain images.

4. The laser processing head (100) as claimed in any of the preceding claims, **characterized in that** the evaluation unit (122) is designed to use, for determining the adjustment travel ($\Delta D_{KL}$) of the imagining optical unit (116) in the direction of the optical axis, which is necessary for focusing the camera image again, a method for finding image sharpness which comprises a variance method, a sum-modulus-difference (SMD) method, a signal power (SP) method, a Fourier analysis method, a Laplace operator or Laplace focusing function method, or focusing by feature point or object tracking methods.

5. The laser processing head (100) as claimed in any of the preceding claims, **characterized in that** the evaluation unit (122) is designed, in the calculation of the correction adjustment travel ($\Delta z_{OS}$, $\Delta z_B$) of the focusing optical unit (114) from the adjustment travel ($\Delta d_{KL}$) of the imaging optical unit (116), to include in the calculation focusing differences of the imaging optical unit (116) and of the focusing optical unit (114) on account of the different wavelengths of the observation system and the working laser light wavelength used.

6. The laser processing head (100) as claimed in any of the preceding claims, furthermore comprising an actuator system, which is designed to adapt the position of the laser processing head (100) relative to a processing surface (104) of the workpiece or movable parts of the optical system in order to traverse the correction adjustment distance ($\Delta z_{OS}$, $\Delta z_B$) for the compensation of the focal point displacement of the focusing optical unit (114).

7. The laser processing head (100) as claimed in claim 6, **characterized in that** the evaluation unit (122) is designed to directly control, by means of the actuator system, the position of the focal point of the focusing optical unit (114) by traversing a correction adjustment travel ($\Delta z_{OS}$, $\Delta z_B$).

8. The laser processing head (100) as claimed in any of claims 1 to 6, **characterized in that** the evaluation unit (122) furthermore has a cognitive system which, by means of a learning process, controls the adjustment of the focusing optical unit (114) depending on a processing time or on processing situations such that the working focus of the laser beam (108) always lies on the workpiece surface (104) or in a position defined relative to the workpiece surface (104).

9. The laser processing head (100) as claimed in claim 8, furthermore comprising at least one sensor unit (124) in addition to the camera (102), wherein the evaluation unit (122) is designed to regulate or control the adjustment of the focusing optical unit (114) with respect to the processing surface (104) of the workpiece on the basis of the signals of the camera (102) and of the at least one additional sensor unit (124).

10. The laser processing head (100) as claimed in claim 9, **characterized in that** the at least one sensor unit (118, 120, 124) is at least one microphone or solid-borne acoustic sensor, at least one additional camera, at least one photodiode, a probe and sensors for detecting technical evaluation and monitoring signals and also actuator system parameters such as the laser power.

11. The laser processing head (100) as claimed in any of claims 8 to 10, furthermore comprising a temperature sensor (118) at the focusing optical unit (114) and/or a temperature sensor (120) at a collimator optical unit (106) for detecting the temperature of the associated optical unit.

12. The laser processing head (100) as claimed in claim 11, **characterized in that** the evaluation unit (122) is designed to feed the temperature of the collimator optical unit (106), detected by the temperature sensor (120) to a learning process in order to control the adjustment of the focusing optical unit (114) depending on the processing time or the processing situation.

13. The laser processing head (100) as claimed in any of claims 8 to 12, **characterized in that** the evaluation unit (122) is furthermore designed to include a time interval ($\Delta t$), a laser power ($P_L$), a progression model (M) or a cognitive empirical value ($C_{OG}$) into a learning process for adjusting the focusing optical unit (114) depending on the processing time or on the processing situation.

14. The laser processing head (100) as claimed in any of claims 8 to 13, **characterized in that** the evaluation unit (122)

is designed to use, for the regulation or control of an adjustment travel ($\Delta z_{OS}$, $\Delta z_B$) of the focusing optical unit (114) on the basis of signals of at least one sensor (124), classification algorithms or self-learning algorithms such as support vector machines, support vector classification, fuzzy logic, information fuzzy networks, fuzzy K-nearest neighbor classifier, K-nearest neighbor classifier, reinforcement learning, Bayesian networks and Bayesian knowledge databases, naive Bayesian classifiers, hidden Markov chains, artificial neural networks and back propagation, regression analysis, genetic programming or decision trees.

**15.** A method for compensating for the change in focus position in a laser processing head (100) as claimed in any of the preceding claims, comprising the following steps:

- focusing the working laser beam (108) onto a workpiece in order to carry out a welding or cutting process on the workpiece,
- moving the focal point of the working laser beam (108) along a processing line on a processing surface (104), wherein the distance between focusing optical unit (114) and processing surface (104) of the workpiece is kept constant,
- compensating for a focal point displacement of the focusing optical unit (114) by adjusting the distance between focusing optical unit (114) and processing surface (104) of the workpiece by a correction adjustment travel ($\Delta z_{OS}$, $\Delta z_B$), wherein the correction adjustment travel ($\Delta z_{OS}$, $\Delta z_B$) of the focusing optical unit (114) is calculated by means of an adjustment travel ($\Delta d_{KL}$) of the imaging optical unit (116) in the direction of the optical axis, which is necessary for focusing the camera image of the camera (102) again in the event of a displacement of the focal point of the focusing optical unit (114).

**16.** The method as claimed in claim 15, **characterized in that**, for the calculation of the adjustment travel ($\Delta z_{OS}$, $\Delta z_B$) of the focusing optical unit (114), use is furthermore made of cognitive systems which, by means of a learning process, control the adjustment of the focusing optical unit (114) depending on a processing time or on processing situations such that the working focus of the working laser beam (108) always lies on the workpiece surface (104) or in a position defined relative to the workpiece surface (104).

## Revendications

**1.** Tête d'usinage à laser (100) pour l'usinage d'une pièce à oeuvrer au moyen d'un faisceau laser de travail (108), comprenant

- une optique de focalisation (114) pour focaliser le faisceau laser de travail (108) sur la surface de la pièce à oeuvrer (104) ou sur une position définie par rapport à la surface de la pièce à oeuvrer (104), **caractérisée par**
- une caméra (102) avec une optique d'imagerie (116) agencée avant celle-ci dans le trajet du faisceau pour observer une zone d'usinage de la pièce à oeuvrer qui est usinée au moyen du faisceau laser de travail (108), et
- une unité d'évaluation (122) qui est réalisée dans le but, au moyen d'un trajet de déplacement ($\Delta D_{KL}$) de l'optique d'imagerie (116) en direction de l'axe optique qui, en cas de décalage du foyer de la lentille de focalisation (114), est nécessaire pour rétablir la netteté de l'image de la caméra, de calculer un trajet de correction ($\Delta z_{OS}$, $\Delta z_B$) qui compense un décalage du foyer de l'optique de focalisation (114) par rapport à la surface (104) de la pièce à oeuvrer ou par rapport à une position définie par rapport à la surface (104) de la pièce à oeuvrer.

**2.** Tête d'usinage à laser (100) selon la revendication 1, comprenant en outre un dispositif d'éclairage dont la lumière est injectée coaxialement dans le trajet du faisceau d'usinage à laser (108) via un diviseur de faisceau, afin d'éclairer la zone d'usinage de la pièce à oeuvrer.

**3.** Tête d'usinage à laser (100) selon la revendication 1 ou 2, **caractérisée en ce que** la caméra (102) est réalisée pour mettre en oeuvre un procédé à plage dynamique élevée ("High Dynamic Range") pour la prise des images.

**4.** Tête d'usinage à laser (100) selon l'une des revendications précédentes, **caractérisée en ce que** l'unité d'évaluation (122) est réalisée dans le but, pour déterminer le trajet ($\Delta D_{KL}$) de l'optique d'imagerie (116) en direction de l'axe optique qui est nécessaire pour rétablir la netteté de l'image de la caméra, de mettre en oeuvre un procédé de recherche de netteté d'image, qui inclut un procédé de variance, un procédé dit "SMD" (Sum Modulus Difference ou "somme des différences d'intensité"), un procédé à puissance de signal, un procédé d'analyse de Fourier, un opérateur de Laplace ou un procédé à fonction de focalisation de Laplace, ou encore une focalisation par un procédé dit "Feature Point" (point caractéristique) ou un procédé de poursuite d'objet.

5. Tête d'usinage à laser (100) selon l'une des revendications précédentes, **caractérisée en ce que** l'unité d'évaluation (122) est réalisée dans le but, lors du calcul du trajet de correction ($Az_{OS}$, $\Delta z_B$) de l'optique de focalisation (114) à partir du déplacement ($\Delta D_{KL}$) de l'optique d'imagerie (116), d'intégrer dans le calcul des différences de focalisation de l'optique d'imagerie (116) et de l'optique de focalisation (114) en raison des différentes longueurs d'onde du système d'observation et des longueurs d'ondes utilisées pour la lumière de travail.

6. Tête d'usinage à laser (100) selon l'une des revendications précédentes, comprenant en outre un système actionneur qui est réalisé dans le but d'ajuster la position de la tête d'usinage à laser (100) par rapport à une surface d'usinage (104) de la pièce à oeuvrer ou à des pièces mobiles du système optique, afin de parcourir le trajet de correction ($\Delta z_{OS}$, $\Delta z_B$) pour la compensation du décalage de foyer de l'optique de focalisation (114).

7. Tête d'usinage à laser (100) selon la revendication 6, **caractérisée en ce que** l'unité d'évaluation (122) est réalisée dans le but de réguler directement la position du foyer de l'optique de focalisation (114) au moyen du système actionneur en parcourant un trajet de correction ($\Delta z_{OS}$, $\Delta z_B$).

8. Tête d'usinage à laser (100) selon l'une des revendications 1 à 6, **caractérisée en ce que** l'unité d'évaluation (122) comprend en outre un système cognitif qui, au moyen d'un processus d'apprentissage, régule le déplacement de l'optique de focalisation (114) en fonction d'un temps d'usinage ou en fonction de situation d'usinage de telle façon que le foyer de travail du faisceau de laser (108) se trouve toujours sur la surface de la pièce à oeuvrer (104), ou dans une position définie par rapport à la surface de la pièce à oeuvrer (104).

9. Tête d'usinage à laser (100) selon la revendication 8, comprenant en outre au moins une unité à capteur (124) additionnelle à la caméra (102), dans laquelle l'unité d'évaluation (122) est réalisée dans le but de réguler ou de commander le déplacement de l'optique de focalisation (114) par référence à la surface d'usinage (104) de la pièce à oeuvrer en se basant sur les signaux de la caméra (102) et de ladite au moins une unité à capteur additionnelle (124).

10. Tête d'usinage à laser (100) selon la revendication 9, **caractérisée en ce que** ladite au moins une unité à capteur (118, 120, 124) est au moins un microphone ou un récepteur de sons structurels, au moins une caméra additionnelle, au moins une photodiode, un palpeur ainsi que des capteurs pour détecter des signaux d'évaluation et de surveillance, ainsi que des paramètres des moyens d'actionnement, tels que la puissance laser.

11. Tête d'usinage à laser (100) selon l'une des revendications 8 à 10, comprenant en outre un capteur de température (118) sur l'optique de focalisation (114) et/ou un capteur de température (120) sur une optique de collimation (106) pour détecter la température de l'optique associée.

12. Tête d'usinage à laser (100) selon la revendication 11, **caractérisée en ce que** l'unité d'évaluation (122) est réalisée dans le but d'injecter la température de l'optique de collimation (106) détectée par le capteur de température (120) dans un processus d'apprentissage, afin de réguler le déplacement de l'optique de focalisation (114) en fonction du temps d'usinage ou de la situation d'usinage.

13. Tête d'usinage à laser (100) selon l'une des revendications 8 à 12, **caractérisée en ce que** l'unité d'évaluation (122) est en outre réalisée dans le but d'intégrer un intervalle temporel ($\Delta t$), une puissance laser ($P_L$), un modèle d'évolution (M) ou une valeur d'expérience cognitive ($C_{OG}$) dans un processus d'apprentissage pour le déplacement de l'optique de focalisation (114) en fonction du temps d'usinage ou de la situation d'usinage.

14. Tête d'usinage à laser (100) selon l'une des revendications 8 à 13, **caractérisé en ce que** l'unité d'évaluation (122) est réalisée dans le but, pour la régulation ou la commande d'un trajet ($\Delta z_{OS}$, $\Delta z_B$) de l'optique de focalisation (114), d'utiliser en se basant sur des signaux d'au moins une unité à capteur (124) des algorithmes de classification ou des algorithmes à auto apprentissage, comme "Support Vector Machines" (machines à support vectoriel), "Support Vector Classification" (classification à support vectoriel), "Fuzzy Logic" (logique floue), "Information Fuzzy Network" (réseau d'information en mode flou), "Fuzzy K-Nearest Neighbor Classification" (classification floue du plus proche voisin de rang K, "K-Nearest Neighbor Classificator" (classification du plus proche voisin de rang K), apprentissage renforcé, réseaux bayésiens et bases de données de connaissances bayésiennes, classificateurs "Naive Bayes", chaînes "Hidden Markov", réseaux neuronaux artificiels, et propagation en retour, analyse de régression, programmation génétique ou arborescences de décision.

15. Procédé pour la compensation de la modification de position de focalisation dans une tête d'usinage à laser (100) selon l'une des revendications précédentes, comprenant les étapes consistant à :

- focaliser le faisceau laser de travail (108) sur une pièce à oeuvrer, afin d'exécuter une opération de soudage ou une opération de découpe sur la pièce à oeuvrer,
- déplacer le point focal du faisceau laser de travail (108) le long d'une ligne d'usinage sur une surface à usiner (104), telle que la distance entre l'optique de focalisation (114) et la surface d'usinage (100) de la pièce à oeuvrer est maintenue constante,
- compenser un déplacement du foyer de l'optique de focalisation (114) par modification de la distance entre l'optique de focalisation (114) et la surface à usiner (104) de la pièce à oeuvrer à raison d'un trajet de correction ($\Delta z_{OS}$, $\Delta z_B$), ledit trajet de correction ($\Delta z_{OS}$, $\Delta z_B$) de l'optique de focalisation (114) étant calculé au moyen d'un trajet de déplacement ($\Delta D_{KL}$) de l'optique d'imagerie (116) en direction de l'axe optique, qui est nécessaire pour rétablir la netteté de l'image de la caméra (102) lors d'un déplacement du foyer de l'optique de focalisation (114).

**16.** Procédé selon la revendication 15, **caractérisé en ce que** l'on emploie pour le calcul du trajet de déplacement ($\Delta z_{OS}$, $\Delta z_B$) de l'optique de focalisation (114) également des systèmes cognitifs qui, par un processus d'apprentissage, régulent le déplacement de l'optique de focalisation (114) en fonction d'un temps d'usinage ou d'une situation d'usinage de telle façon que le foyer de travail du faisceau laser de travail (108) se trouve toujours sur la surface (104) de la pièce à oeuvrer ou dans une position définie par rapport à la surface (104) de la pièce à oeuvrer.

Figur 1

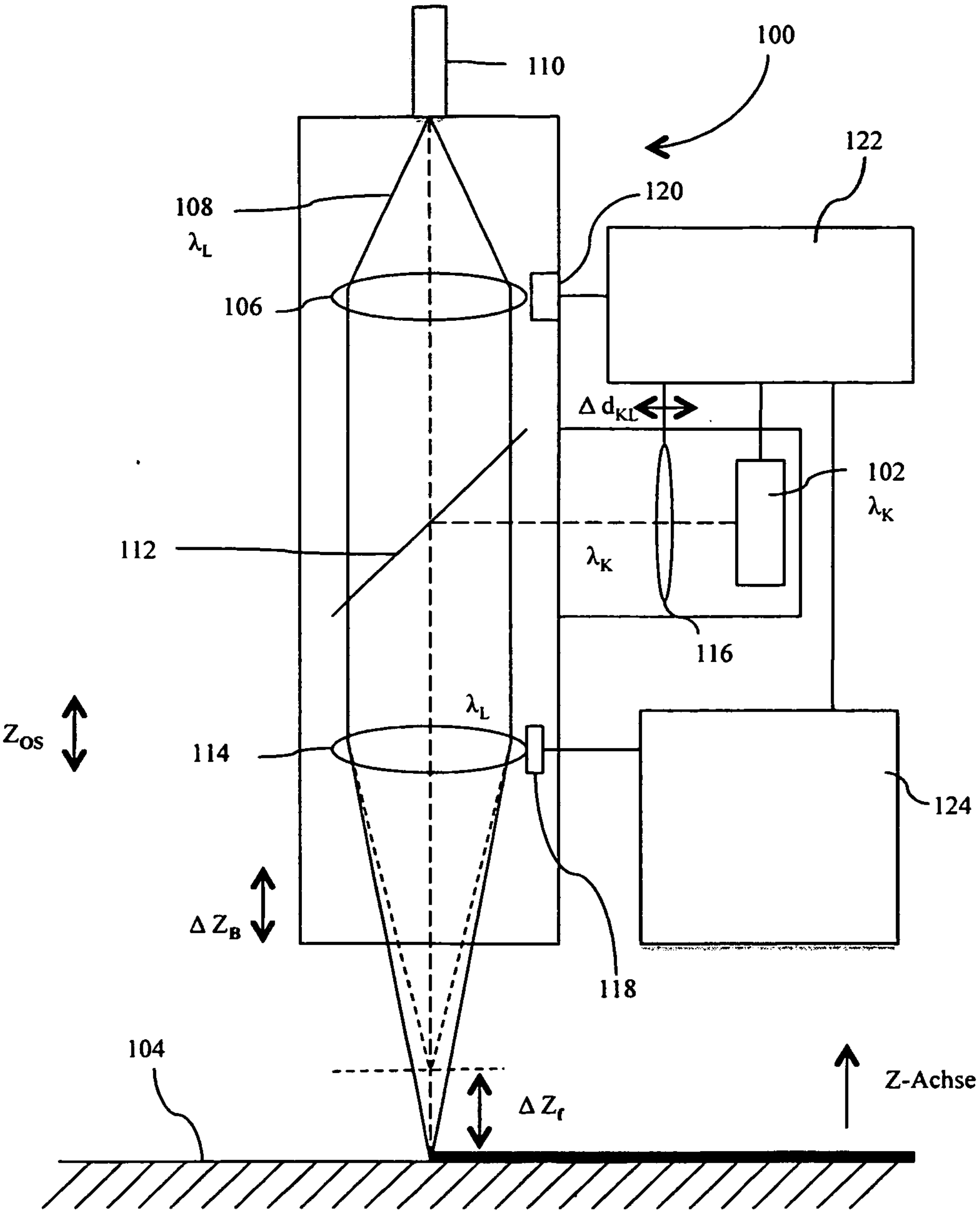
110
100
122
120
108
$\lambda_L$
106
$\Delta d_{KL}$
102
$\lambda_K$
112
$\lambda_K$
116
$\Delta Z_{OS}$
$\lambda_L$
114
124
$\Delta Z_B$
118
104
$\Delta Z_f$
Z-Achse

Figur 2

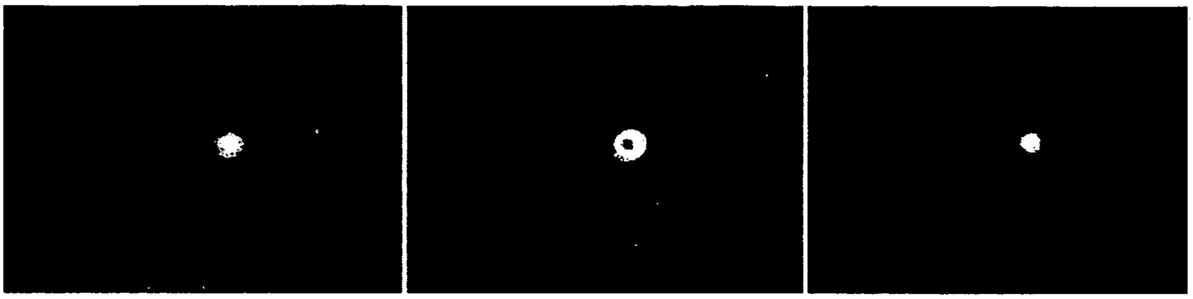

Figur 3

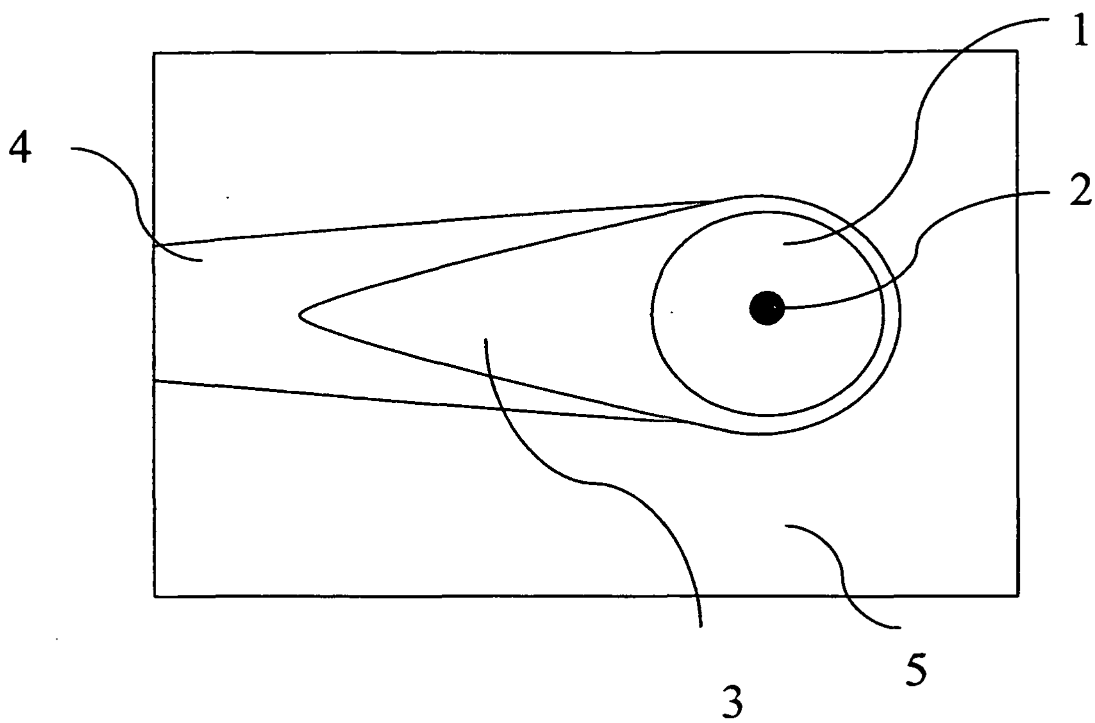

Figur 4

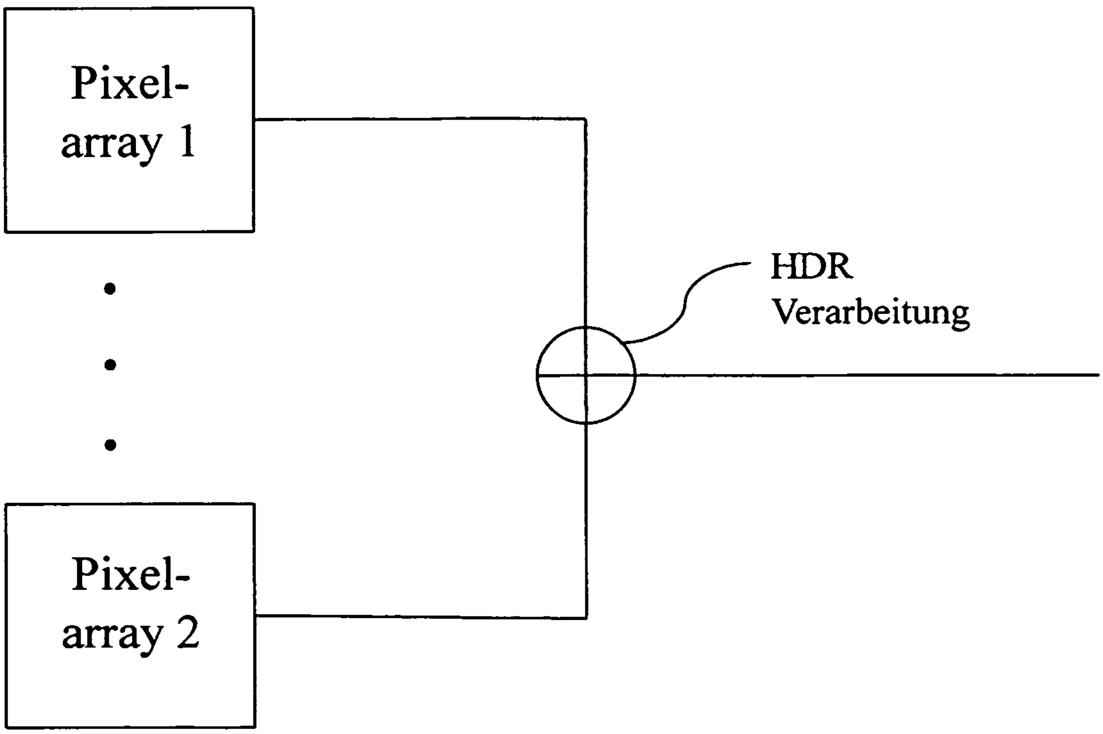

Figur 5

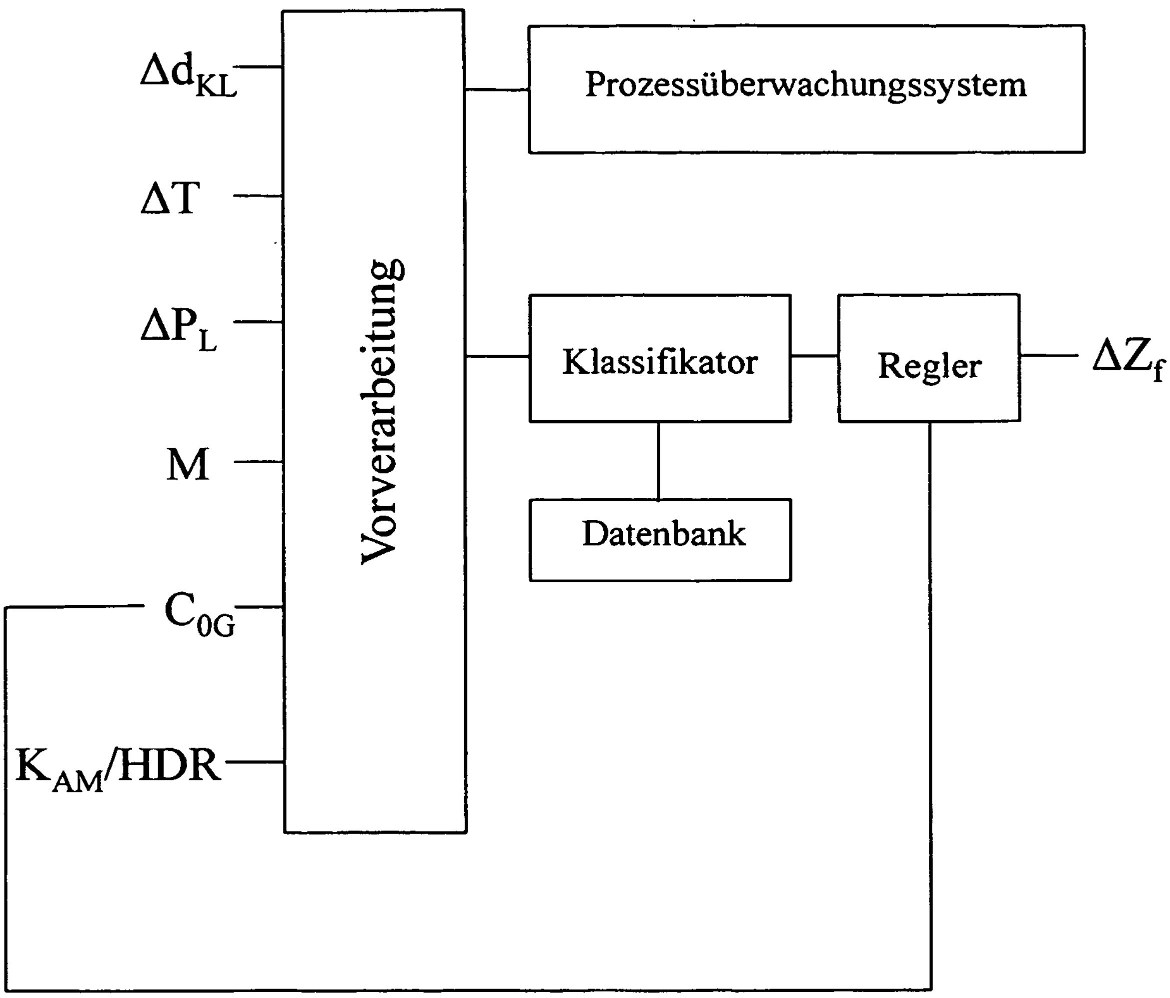
$\Delta d_{KL}$
$\Delta T$
$\Delta P_L$
M
$C_{0G}$
$K_{AM}$/HDR
Vorverarbeitung
Prozessüberwachungssystem
Klassifikator
Regler
Datenbank
$\Delta Z_f$

Figur 6

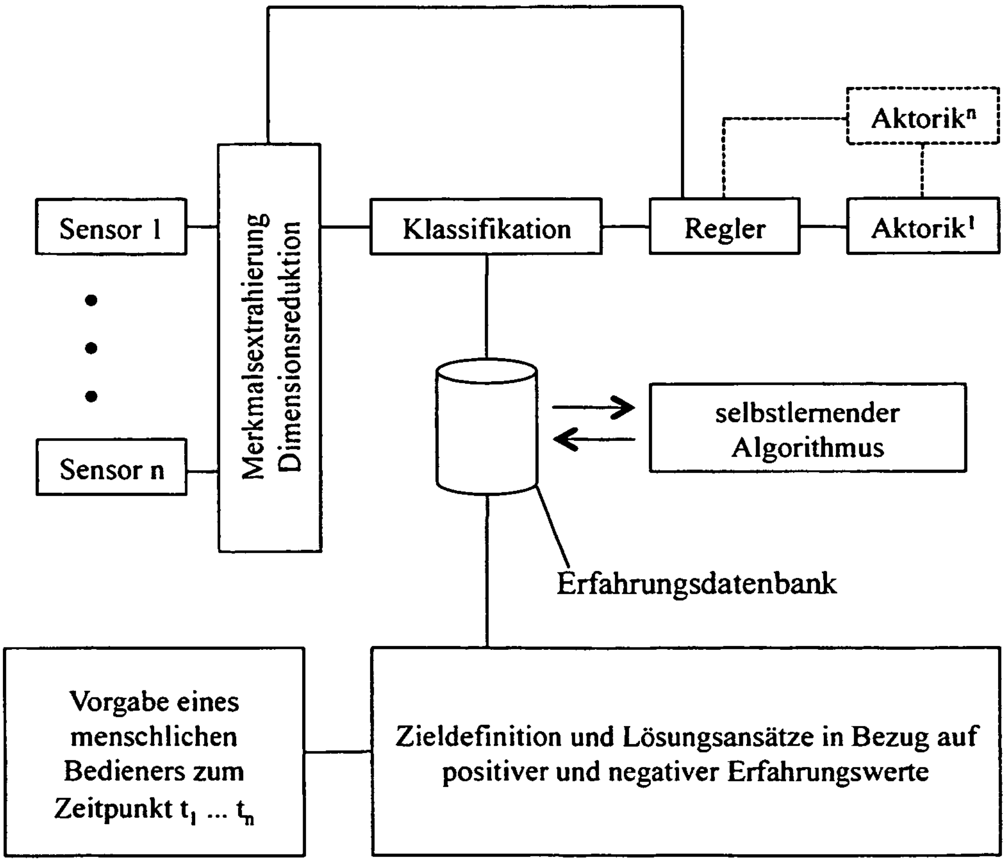
Sensor 1
Sensor n
Merkmalsextrahierung
Dimensionsreduktion
Klassifikation
Regler
Aktorik$^n$
Aktorik$^1$
selbstlernender Algorithmus
Erfahrungsdatenbank
Vorgabe eines menschlichen Bedieners zum Zeitpunkt $t_1$ ... $t_n$
Zieldefinition und Lösungsansätze in Bezug auf positiver und negativer Erfahrungswerte

Figur 7

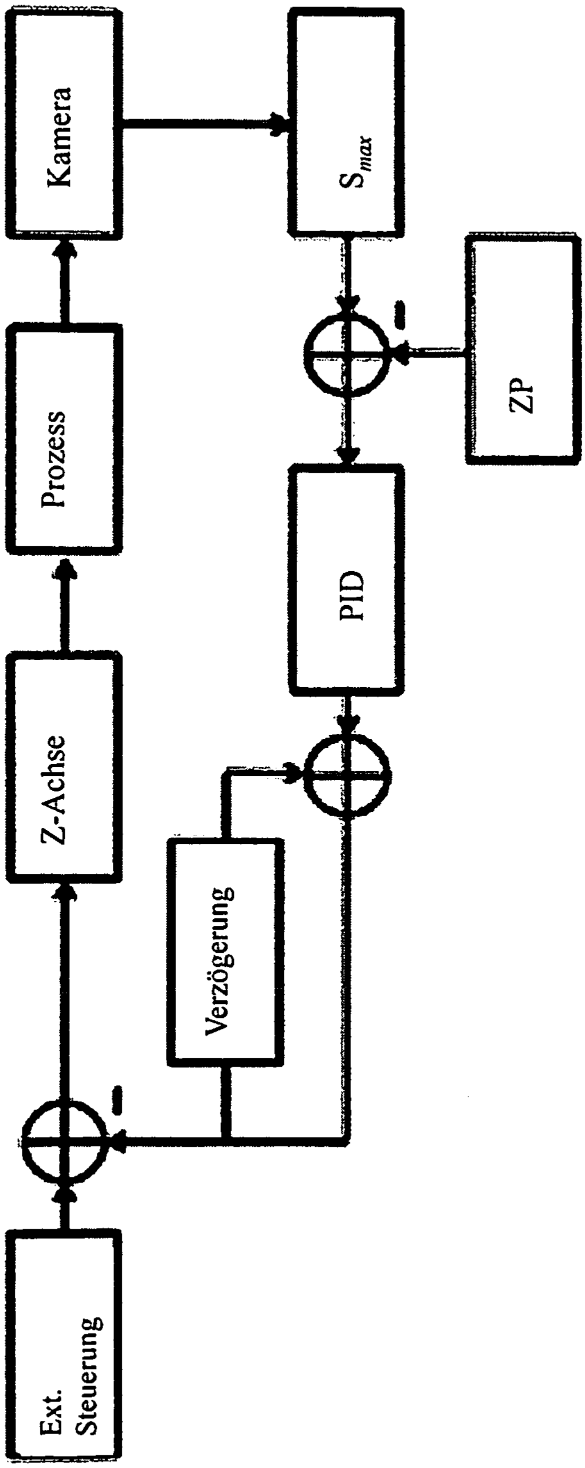
Kamera
Prozess
Z-Achse
Ext. Steuerung
$S_{max}$
ZP
PID
Verzögerung

Figur 8

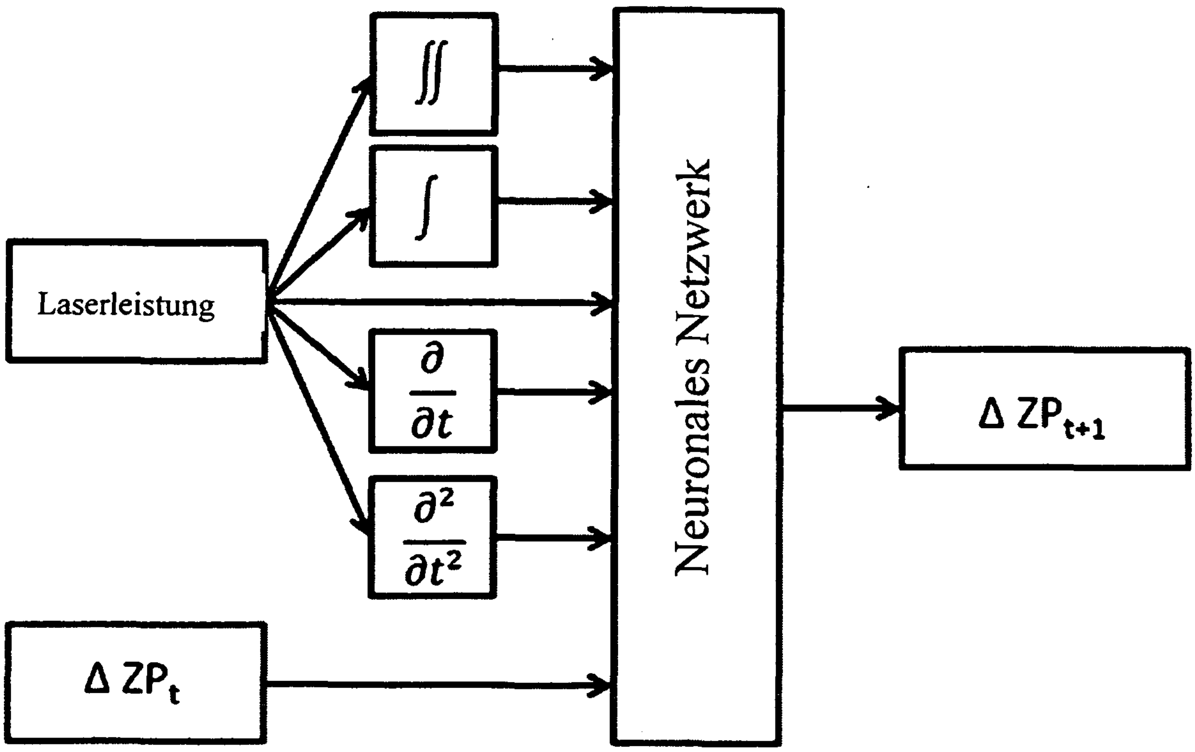
Laserleistung
$\iint$
$\int$
$\frac{\partial}{\partial t}$
$\frac{\partial^2}{\partial t^2}$
$\Delta ZP_t$
Neuronales Netzwerk
$\Delta ZP_{t+1}$

Figur 9

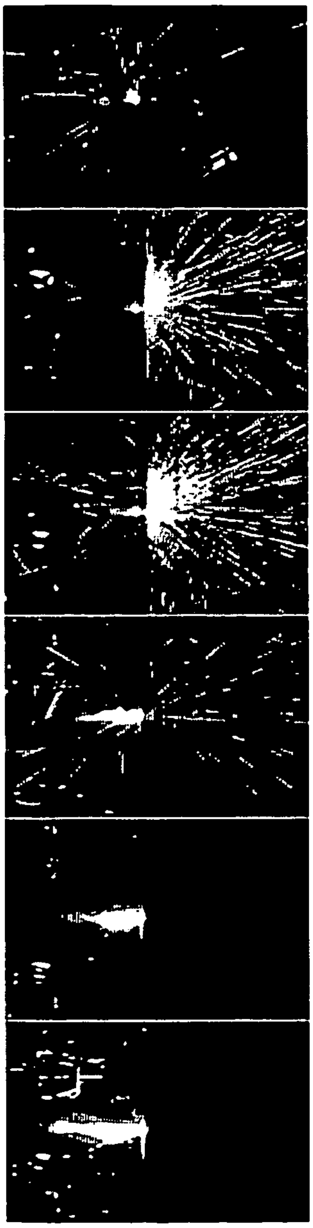

Figur 10

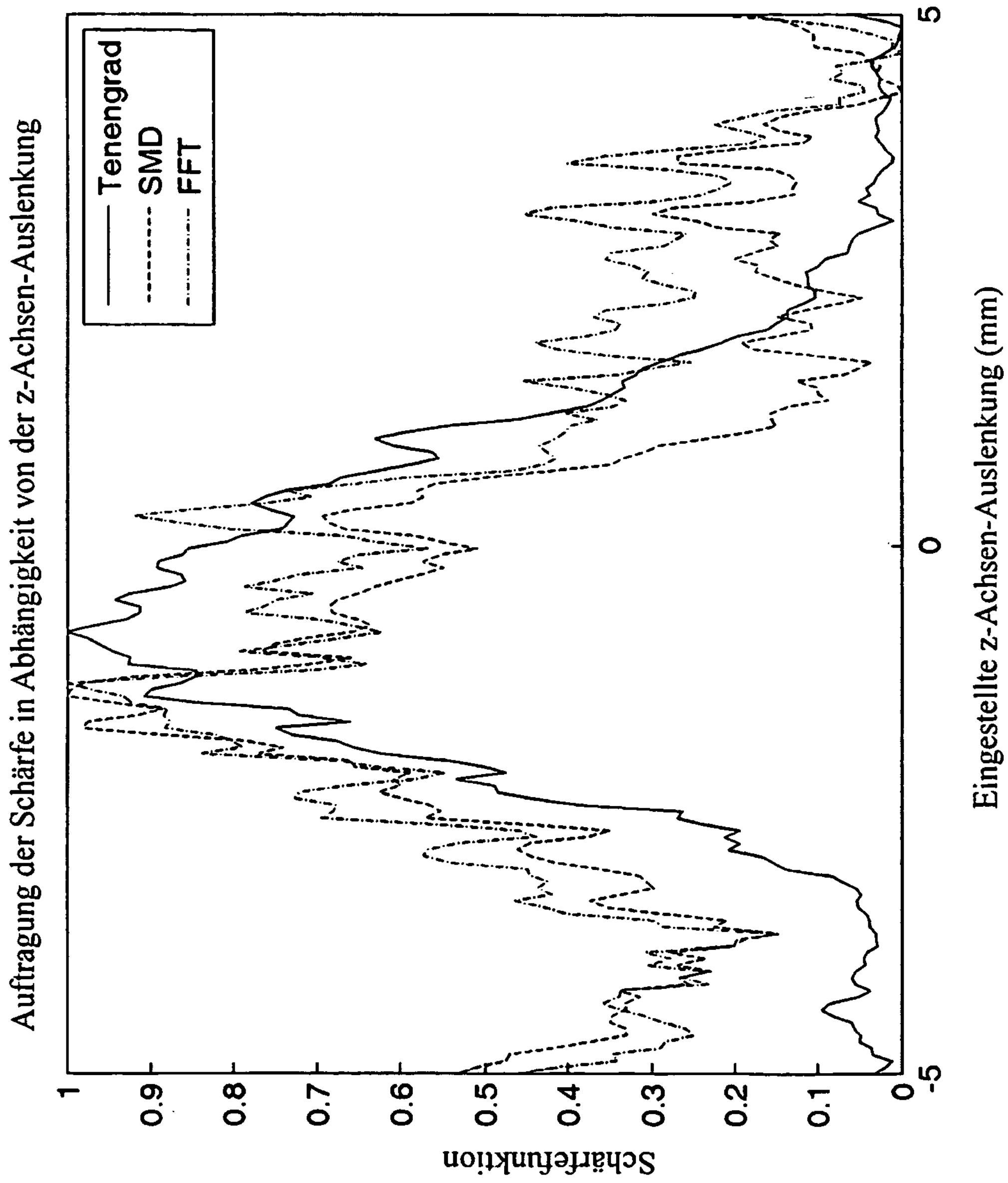
Auftragung der Schärfe in Abhängigkeit von der z-Achsen-Auslenkung
Tenengrad
SMD
FFT
Schärfefunktion
Eingestellte z-Achsen-Auslenkung (mm)
0
0.1
0.2
0.3
0.4
0.5
0.6
0.7
0.8
0.9
1
-5
0
5

Figur 11

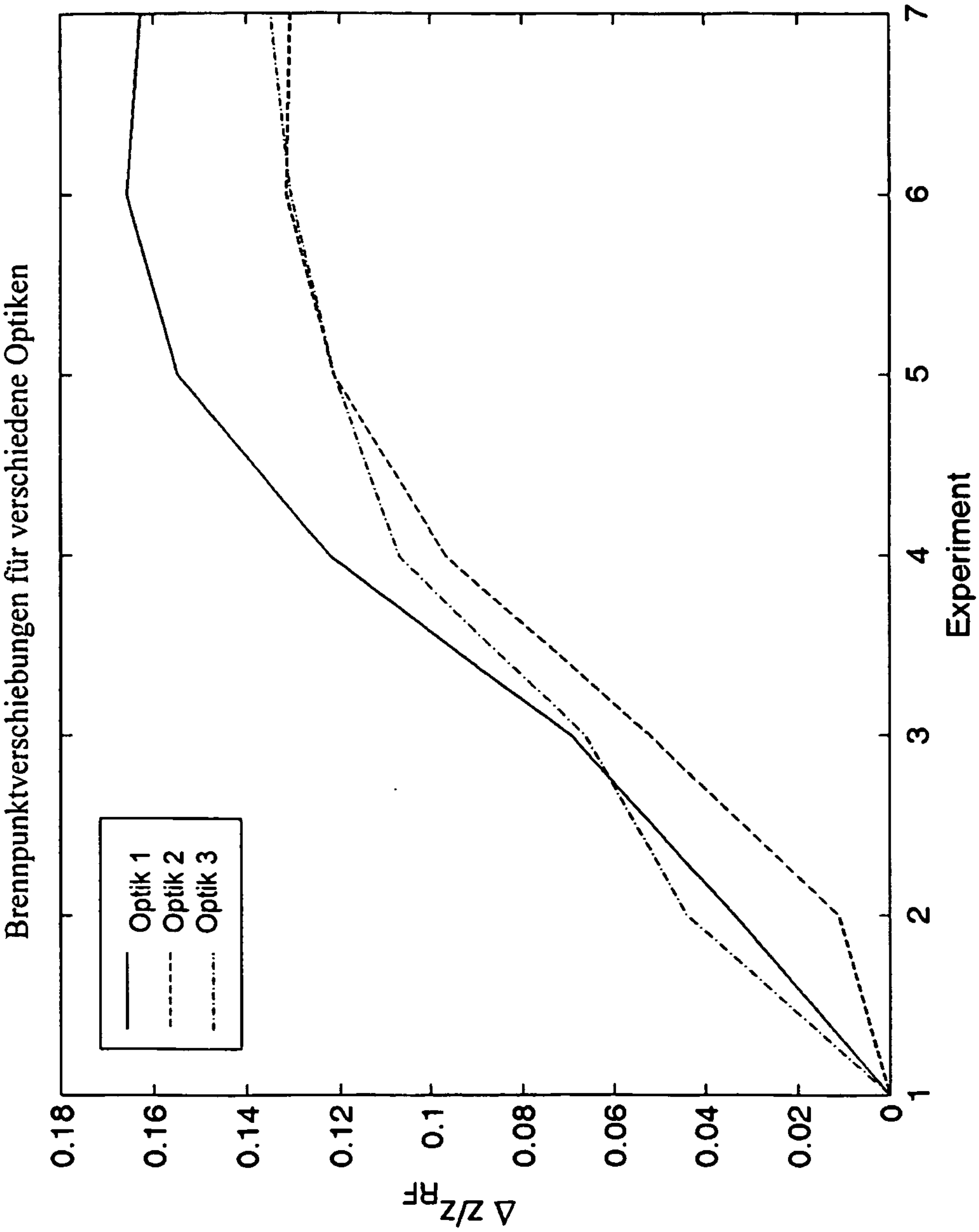
Brennpunktverschiebungen für verschiedene Optiken
Optik 1
Optik 2
Optik 3
Experiment
1
2
3
4
5
6
7
Δ z/z_RF
0
0.02
0.04
0.06
0.08
0.1
0.12
0.14
0.16
0.18

Figur 12

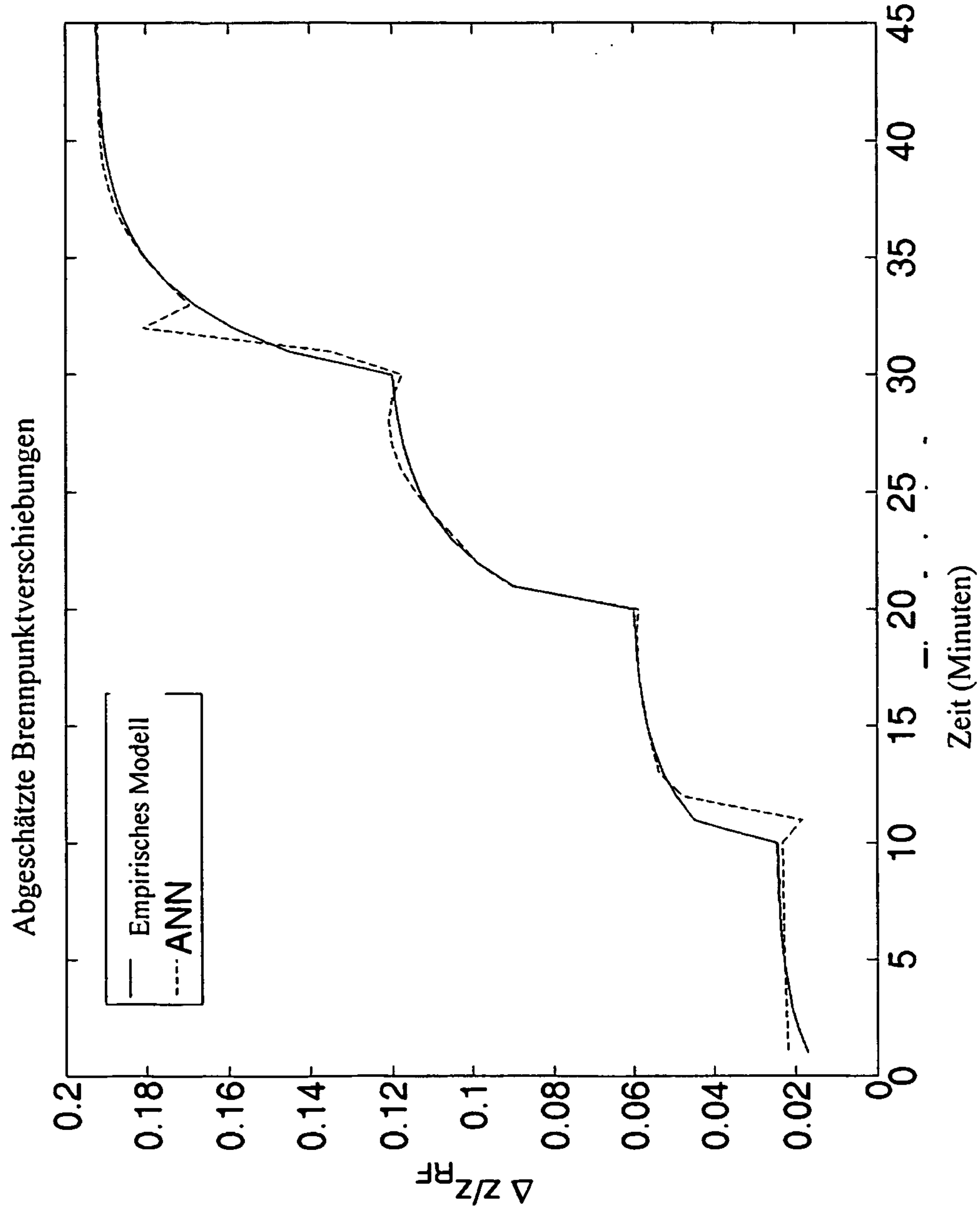
Abgeschätzte Brennpunktverschiebungen
Empirisches Modell
ANN
Zeit (Minuten)
Δ z/z_RF
0 5 10 15 20 25 30 35 40 45
0 0.02 0.04 0.06 0.08 0.1 0.12 0.14 0.16 0.18 0.2

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19516376
- DE 19925413
- DE 102004043076 A1
- DE 19716293 A1


### In der Beschreibung aufgeführte Nicht-Patentliteratur


- **F. HARAN ; D. HAND ; C. PETERS ; J. JONES.** Real-time focus control in laser welding. *Meas. Sei. Technol.,* 1996, 1095-1098
- **G. HUI ; O. FLEMMING OVE.** *Automatic Optimization of Focal Point Position in CO2 Laser Welding with Neural Networks in Focus Control System,* 1997